# EUROPEAN PATENT SPECIFICATION

(11) **EP 3 670 310 B1**
(45) Date of publication and mention of the grant of the patent: **18.10.2023**
(21) Application number: 19217933.1
(22) Date of filing: 19.12.2019
(51) Int. Cl.: B62J 6/04, B62J 17/00, B62J 50/26

(54) **STRADDLED VEHICLE**
GRÄTSCHSITZFAHRZEUG
VÉHICULE À ENFOURCHER

(30) Priority: 21.12.2018 JP 2018239808
(43) Date of publication of application: 24.06.2020
(73) Proprietor: YAMAHA HATSUDOKI KABUSHIKI KAISHA, Iwata-shi, Shizuoka 438-8501 (JP)
(72) Inventor: DOI, Tatsuki, Shizuoka, 438-8501 (JP)
(74) Representative: Grünecker Patent- und Rechtsanwälte PartG mbB

(56) References cited:
- EP-A1- 2 281 736
- EP-A1- 2 463 184
- JP-A- H1 040 716
- JP-U- S6 064 149
- US-A1- 2007 230 198
- US-A1- 2011 051 441
- Tom .: "2017 Yamaha D'elight scooter - Saltire Motorcycles Edinburgh", , 18 November 2016 (2016-11-18), XP055682381, Retrieved from the Internet: URL:https://www.saltiremotorcycles.com/201 7-yamaha-delight-scooter/ [retrieved on 2020-04-02]

## Description

This invention relates to a straddled vehicle according to the independent claim 1. Such a straddled vehicle in accordance with the preamble of claim 1, can be taken from the prior art document EP 2 463 184 A1.

Prior art document US 2007/230198 A1 discloses a straddled vehicle with a light unit having a taillight. Said taillight comprises a tail lamp bulb and an outer lens, made of a transparent resin. The outer lens is a transparent one piece element. Moreover, it is provided an inner lens that is preferably colored red and provided here with a notch to allow light from the tail lamp bulb to directly illuminate a license plate without passing through the inner lens. The outer lens transparent one piece element and there is no bottom like that of the present invention.

Japanese Unexamined Patent Publication No. 2012-240425 discloses a two-wheeled motor vehicle. Description will be made hereunder showing, in parentheses, the same reference signs as used in the above patent publication. The two-wheeled motor vehicle (1) includes a taillight (20). The taillight (20) has a bulb (21) and a lens (25). The bulb (21) is a light source that emits light. The lens (25) is located behind the bulb (21). The lens (25) is visible in a rear view of the vehicle. The light of the bulb (21) passes through the lens (25). The light of the bulb (21) is emitted rearward of the lens (25). That is, the lens (25) shines by the light of the bulb (21). The lens (25) corresponds to a light-emitting surface of the taillight (20).

The lens (25) has a lens central part (25a). The lens central part (25a) extends rearward and upward from a lower edge (25c) of the lens central part (25a). The lens (25) is colored the emission color (e.g. red) of the taillight (20). Therefore, the lens (25) emits red light.

The taillight (20) has an opening (A) formed forward of the lower edge (25c) of the lens central part (25a). The light of the bulb (21) passes through the opening (A) to be emitted also downward of the opening (A).

The two-wheeled motor vehicle (1) includes a rear fender (11) and a license plate. The rear fender (11) is located below the taillight (20). The license plate is attached to the rear fender (11). The license plate is illuminated by the light of the bulb (21) emitted downward of the opening (A). Thus, the bulb (21) makes the lens (25) emit light and illuminate the license plate.

For expediency, here, the light emitted from the lens (25) will be called the "first light". The light emitted from the opening (A) will be called the "second light". Both the first light and second light are the light from the bulb (21). That is, the light source of the first light is the same as the light source of the second light. The first light is red, for example. The second light is white or colorless, for example. The license plate is illuminated by the second light. That is, the license plate is illuminated by white or colorless light.

The example according to Japanese Unexamined Patent Publication No. 2012-240425 does not clearly show a position of the license plate. However, since the bulb (21) is shared as the light source which illuminates the license plate and the light source which makes the lens (25) emit light, the license plate is probably located near the taillight (20). Consequently, the first light may easily strike upon the license plate. Suppose the red first light strikes upon the license plate, the visibility of the license plate will be impaired. Thus, it has been considered that there is a possibility of the visibility of the license plate becoming impaired.

Here, the visibility is a visibility for third parties other than the riders on the two-wheeled motor vehicle (1). The riders on the two-wheeled motor vehicle (1) are a driver and a passenger, for example. The third parties are, for example, people traveling on vehicles more rearward than the two-wheeled motor vehicle (1) and people walking more rearward than the two-wheeled motor vehicle (1).

It is an object of the present invention to provide a straddled vehicle which can secure visibility of a license plate even where the same light source illuminates both light-emitting surfaces of a taillight and the license plate.

According to the present invention said object is solved by a straddled vehicle having the features of independent claim 1. Preferred embodiments are laid down in the dependent claims.

It has been considered to enlarge a spacing between the license plate and the taillight (20). Accordingly, the enlarged spacing between the lens (25) and the license plate can inhibit the first light from striking upon the license plate. This can prevent the first light from impairing the visibility of the license plate.

However, the enlarged spacing between the license plate and the taillight (20) creates two new problems. Firstly, since the spacing between the bulb (21) and the license plate is also enlarged, it becomes difficult for the second light to illuminate the license plate appropriately. It is therefore hard to secure the visibility of the license plate. Secondly, the rear of the two-wheeled motor vehicle (1) is enlarged.

Then, it has been considered reducing the taillight (20) in size. Specifically, it has been considered to making the lens (25) smaller without enlarging the spacing between the license plate and the taillight (20). This can inhibit the first light from striking upon the license plate. It can therefore prevent the first light from impairing the visibility of the license plate.

However, the taillight (20) reduced in size creates a new problem. The new problem is that, since the lens (25) (that is, the light-emitting surface of the taillight (20)) is small, the visibility of the taillight (20) is impaired. Further, in Japanese Unexamined Patent Publication No. 2012-240425, the lens central part (25a) extends rearward and upward from the lower edge (25c) of the lens central part (25a). Generally the taillight is located in a position lower than the eyes of third parties other than the riders on the two-wheeled motor vehicle (1). Consequently, where the taillight (20) is reduced in size, the shape of the lens central part (25a) prompts lowering of the visibility of the taillight (20).

Then, it has been considered a straddled vehicle which can secure visibility of the license plate and can secure visibility of the taillight even where the same light source illuminates both the light-emitting surface of the taillight, and the license plate.

Accordingly, it is provides the following construction. A straddled vehicle, according to the present teaching, comprises:
a taillight;
a right side cover;
a left side cover;
a rear undercover located between the right side cover and the left side cover;
a mud guard connected to at least one of the right side cover and the left side cover, located below at least one of a lower edge of the right side cover and a lower edge of the left side cover in a side view of the vehicle, and extending downward and rearward; and
a license plate supported by the mud guard;
wherein
the taillight includes:
   a light source;
   a first exposed portion visible in a rear view of the vehicle; and
   a bottom located lower than the light source and invisible in the rear view of the vehicle;
the first exposed portion includes:
   a first light transmitting portion located more rearward than the light source and having light transmissive properties; and
   a second light transmitting portion located more rearward than the light source and having light transmissive properties;
the first light transmitting portion extends downward and rearward in a vehicle center section including a center of the straddled vehicle and extending perpendicular to a vehicle transverse direction;
the second light transmitting portion extends downward and forward from a rear end of the first light transmitting portion in the vehicle center section;
the bottom extends forward from a lower end of the second light transmitting portion and is located higher than the license plate in the vehicle center section;
the bottom includes a third light transmitting portion having light transmissive properties;
the rear undercover includes a first portion located below the second light transmitting portion and above the license plate in the rear view of the vehicle;
the first portion extends downward and rearward from at least one of the lower end of the second light transmitting portion and a rear end of the bottom in the vehicle center section;
the rear undercover includes a rear end located more rearward than a rear end of the first exposed portion in the vehicle center section; and
the rear end of the rear undercover is located more rearward than a rear end of the license plate in the vehicle center section.

The taillight has a light source and a first exposed portion. The light source emits light. The first exposed portion is visible in the rear view of the vehicle. The first exposed portion includes a first light transmitting portion and a second light transmitting portion. The first light transmitting portion and second light transmitting portion are located more rearward than the light source. The first light transmitting portion and second light transmitting portion have light transmissive properties. The first light transmitting portion extends downward and rearward in the vehicle center section. The second light transmitting portion extends downward and forward from the rear end of the first light transmitting portion in the vehicle center section. The light from the light source passes through the first light transmitting portion and second light transmitting portion. The light from the light source is emitted from the first light transmitting portion and second light transmitting portion. The first light transmitting portion and second light transmitting portion emit light by the light from the light source. The first light transmitting portion and second light transmitting portion correspond to light-emitting surfaces of the taillight.

The taillight has a bottom. The bottom is located lower than the light source. The bottom is invisible in the rear view of the vehicle. Thus, the bottom does not correspond to a light-emitting surface of the taillight. The bottom extends forward from a lower end of the second light transmitting portion in the vehicle center section. The bottom is located higher than the license plate in the vehicle center section. The bottom has a third light transmitting portion. The third light transmitting portion has light transmissive properties. The light from the light source passes through the third light transmitting portion. The light from the light source is emitted from the third light transmitting portion. The light emitted from the third light transmitting portion illuminates the license plate.

Thus, the light source illuminates both the light-emitting surfaces of the taillight and the license plate. Here, the light emitted from the first light transmitting portion will be called the first light. The light emitted from the second light transmitting portion will be called the second light. The light emitted from the third light transmitting portion will be called the third light. All the first light, second light, and third light are the lights given off by the light source.

The rear undercover is located between the right side cover and left side cover. The rear undercover has a first portion. The first portion is located below the second light transmitting portion in rear view of the vehicle. The first portion is located above the license plate in the rear view of the vehicle. The first portion of the rear undercover, in the vehicle center section, extends downward and rearward from at least one of the lower end of the second light transmitting portion and the rear end of the bottom. Consequently, the first portion of the rear undercover is, in the vehicle center section, located more rearward than at least one of the lower end of the second light transmitting portion and the rear end of the bottom. The first portion of the rear undercover therefore does not prevent the third light from illuminating the license plate. Thus, the third light can illuminate the license plate conveniently. This can conveniently secure visibility of the license plate.

The rear undercover has a rear end in the vehicle center section. The rear end of the rear undercover is located more rearward than the rear end of the first exposed portion in the vehicle center section. The rear undercover can therefore inhibit the first light and second light from striking upon the license plate. This can inhibit the first light and second light from lowering the visibility of the license plate.

The rear end of the rear undercover is located more rearward than the rear end of the license plate in the vehicle center section. Consequently, the rear undercover can further inhibit the first light and second light from striking upon the license plate. This can further inhibit the first light and second light from lowering the visibility of the license plate.

As noted above, the second light transmitting portion extends downward and forward in the vehicle center section. The first portion of the rear undercover, in the vehicle center section, extends downward and rearward from at least one of the lower end of the second light transmitting portion and the rear end of the bottom. The second light can therefore conveniently illuminate the first portion of the rear undercover. As a result, in addition to the first light transmitting portion and second light transmitting portion, in rear view of the vehicle, the first portion of the rear undercover also appears bright. Consequently, the visibility of the taillight can be improved effectively.

The first light transmitting portion extends downward and rearward in the vehicle center section. Thus, even if the taillight is located in a position lower than the third parties' eyes, the visibility of the taillight can be further improved.

According to this straddled vehicle, as described above, even where the same light source illuminates both the light-emitting surfaces of the taillight and the license plate, the visibility of the license plate can be secured. Further, according to this straddled vehicle, the visibility of the taillight can be secured.

In the above straddled vehicle, it is preferred that the first portion includes a rear end located more rearward than a rear end of the second light transmitting portion in the vehicle center section. This construction allows the first portion sufficiently to receive the second light. Consequently, the visibility of the taillight can be improved effectively. Further, the first portion can inhibit the first light and second light from striking upon the license plate.

In the above straddled vehicle, it is preferred that the first portion is in contact with at least one of the lower end of the second light transmitting portion and the rear end of the bottom in the vehicle center section. This construction allows the rear undercover to receive the second light appropriately. Consequently, the visibility of the taillight can be improved effectively. Further, the first portion can appropriately inhibit the first light and second light from striking upon the license plate. This can appropriately inhibit the first light and second light from lowering the visibility of the license plate.

In the above straddled vehicle, it is preferred that the rear undercover is located in a position overlapping a whole of the second light transmitting portion in a bottom view of the vehicle; and the rear undercover is located in a position not overlapping at least part of the third light transmitting portion in the bottom view of the vehicle. The rear undercover is, in the vehicle bottom view, located in a position overlapping the whole second light transmitting portion. The rear undercover can therefore inhibit the second light from striking upon the license plate. The second light can therefore be inhibited from lowering the visibility of the license plate. The rear undercover is, in the vehicle bottom view, located in a position not overlapping at least part of the third light transmitting portion. The rear undercover therefore does not hamper the third light from illuminating the license plate. The third light can thus conveniently illuminate the license plate. This can conveniently secure visibility of the license plate.

In the above straddled vehicle, it is preferred that the license plate extends rearward and downward in the vehicle center section; and at least part of the third light transmitting portion is located more rearward than a front end of the license plate and more forward than the rear end of the license plate in the vehicle center section. This construction allows the third light to strike upon the license plate further conveniently. That is, the light source can illuminate the license plate further conveniently. This can further conveniently secure visibility of the license plate.

In the above straddled vehicle, it is preferred that a length of the first light transmitting portion is larger than a length of the second light transmitting portion in the vehicle center section. This construction can easily improve the visibility of the taillight.

In the above straddled vehicle, it is preferred that an area of the first light transmitting portion is larger than an area of the second light transmitting portion in the rear view of the vehicle. This construction can easily improve the visibility of the taillight.

In the above straddled vehicle, it is preferred that a length in the vehicle transverse direction of the second light transmitting portion is larger than a length in an vehicle up-down direction of the second light transmitting portion. This construction can easily secure an area of the first portion of the rear undercover for receiving the second light. In other words, this construction can easily secure an area on the first portion of the rear undercover illuminated by the second light. The visibility of the taillight can therefore be improved easily.

It is preferred that the above straddled vehicle further comprises a muffler, wherein at least part of the first exposed portion is located more rearward than the muffler. The first exposed portion is located in a relatively rearward position. Consequently, an installation space for the first exposed portion can be secured easily.

It is preferred that the above straddled vehicle further comprises flashers; wherein the flashers include a second exposed portion visible in the rear view of the vehicle, and a third exposed portion visible in the rear view of the vehicle; the second exposed portion extends rightward and upward from the first exposed portion in the rear view of the vehicle; the third exposed portion extends leftward and upward from the first exposed portion in the rear view of the vehicle; and a whole of the first exposed portion, the second exposed portion, and the third exposed portion is substantially U-shaped or substantially V-shaped in the rear view of the vehicle. This construction can conveniently secure the visibility of the taillight and the visibility of the flashers.

It is preferred that the above straddled vehicle further comprises a rear wheel; wherein at least one of a length in a vehicle longitudinal direction of a whole of the first exposed portion and the second exposed portion and a length in the vehicle longitudinal direction of a whole of the first exposed portion and the third exposed portion is larger than a radius of the rear wheel. At least one of the whole of the first exposed portion and the second exposed portion and the whole the first exposed portion and the third exposed portion is long in the vehicle longitudinal direction. Consequently, the visibility of the taillight and the visibility of the flashers can be secured conveniently.

In the above straddled vehicle, it is preferred that the first exposed portion is located more rearward than a rear end of the rear wheel. This construction can easily secure an installation space for the taillight and flushers.

It is preferred that the above straddled vehicle further comprises a body frame, and joining members for joining a whole of the taillight and the flashers to the body frame. The taillight and flashers can be supported firmly. The taillight and flashers can therefore be enlarged easily.

In the above straddled vehicle, it is preferred that the mud guard includes a rear edge extending downward and rearward in the side view of the vehicle; and the first exposed portion is, in the side view of the vehicle, located more rearward than at least one of a first intersection of the rear edge of the mud guard and the lower edge of the right side cover and a second intersection of the rear edge of the mud guard and the lower edge of the left side cover, This construction can easily provide an installation space for the license plate below the first exposed portion. Consequently, the third light can illuminate the license plate appropriately. This can easily secure the visibility of the license plate.

In the above straddled vehicle, it is preferred that the right side cover has a rear end; the left side cover has a rear end; and at least one of the rear end of the right side cover and the rear end of the left side cover is located higher and more rearward than a rear end of the license plate. With this construction, at least one of the right side cover and left side cover can further inhibit the first light and second light from striking upon the license plate. The first light and second light can therefore be further inhibited from lowering the visibility of the license plate.

For the purpose of illustrating the present teaching, there are shown in the drawings several forms which are presently preferred, it being understood, however, that the present teaching is not limited to the precise arrangement and instrumentalities shown.
Fig. 1 is a left side view of a straddled vehicle according to an embodiment.
Fig. 2 is a plan view of a rear portion of the straddled vehicle.
Fig. 3 is a rear view of a portion of the straddled vehicle.
Fig. 4 is a perspective view of the rear portion of the straddled vehicle.
Fig. 5 is a side view of a body frame.
Fig. 6 is a plan view of the body frame.
Fig. 7 is a side view showing a support structure for a taillight unit.
Fig. 8 is a plan view showing the support structure for the taillight unit.
Fig. 9 is a perspective view showing the support structure for the taillight unit.
Fig. 10 is a rear view of the taillight unit.
Fig. 11 is a sectional view taken through a vehicle center of the rear portion of the straddled vehicle.
Fig. 12 is a bottom plan view of a taillight and a rear undercover.
Fig. 13 is a rear view of a portion of the straddled vehicle schematically showing areas which appear bright when the taillight is lit.
Fig. 14 is a sectional view taken through the vehicle center of the rear portion of the straddled vehicle in a modified embodiment.

A straddled vehicle according to the present teaching will be described hereinafter with reference to the drawings.

### 1. Outline construction of the straddled vehicle

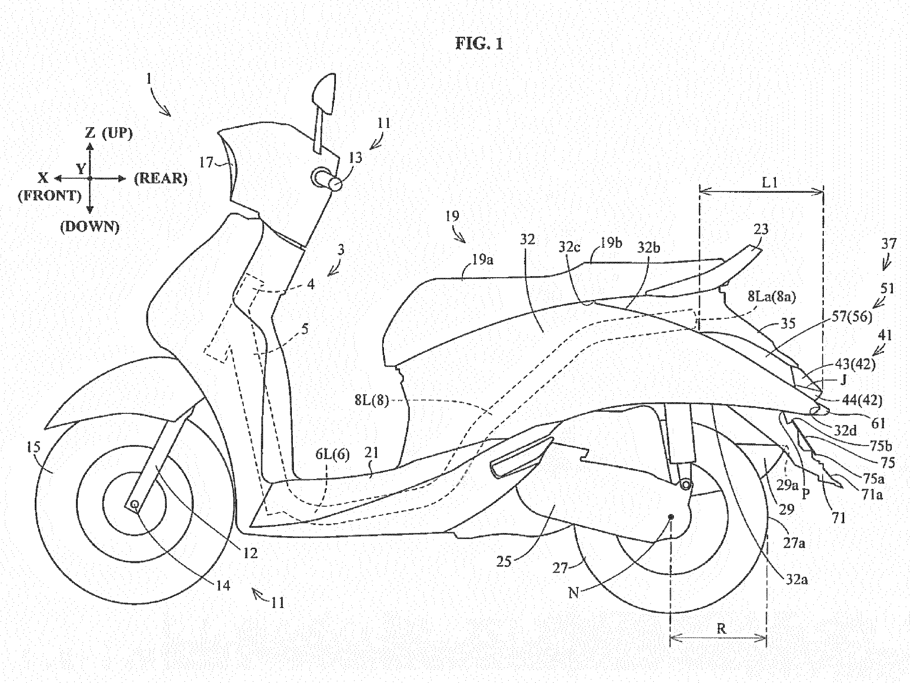

Fig. 1 is a left side view of a straddled vehicle according to an embodiment.

Fig. 1 shows a longitudinal direction X, a transverse direction Y, and an up-down direction Z of a straddled vehicle 1. The longitudinal direction X, transverse direction Y, and up-down direction Z are defined with reference to the driver (or rider) mounted on the straddled vehicle 1. The longitudinal direction X, transverse direction Y, and up-down direction Z are perpendicular to one another. The longitudinal direction X, transverse direction Y, and up-down direction Z are examples of the vehicle longitudinal direction, vehicle transverse direction, and vehicle up-down direction, respectively.

The terms "forward", "rearward", "upward", "downward", "rightward", and "leftward", respectively mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions approximate to the longitudinal direction X. The directions approximate to the longitudinal direction X are, for example, directions at angles not exceeding 45 degrees to the longitudinal direction X. Similarly, unless otherwise stated, "rightward" and "leftward" include not only directions parallel to the transverse direction Y but also directions approximate to the transverse direction Y. Unless otherwise stated, the "upward" and "downward" include not only directions parallel to the up-down direction Z but also directions approximate to the up-down direction Z. For reference, the drawings show front, rear, up, down, right, and left, as appropriate.

This specification uses various expressions describing arrangements, which have the following meanings, respectively. The following description will be made taking the transverse direction Y for example, and the same may be applied to the longitudinal direction X and up-down direction Z.

The expression "Member A is located more rightward/leftward than member B," defines a position in the transverse direction Y of member A relative to member B, and does not define a position in the longitudinal direction X or the up-down direction Z of member A relative to member B. In the case of this expression, member A may, or may not, overlap member B in a side view of the vehicle.

The expression "Member A is located rightward/leftward of member B," without reference to a looking direction defines a position in the transverse direction Y of member A relative to member B, a position in the longitudinal direction X of member A relative to member B, and a position in the up-down direction Z of member A relative to member 8. This expression means that member A is located more rightward/leftward than member B, and that at least part of member A overlaps at least part of member B in a side view of the vehicle.

The expression "Member A is located rightward/leftward of member B in a plan view of the vehicle," defines a position in the transverse direction Y of member A relative to member B, and a position in the longitudinal direction X of member A relative to member B, and does not define a position in the up-down direction Z of member A relative to member B. This expression means that member A is located more rightward/leftward than member B, and that the front end of member A is located more forward than the rear end of member B, and that the rear end of member A is located more rearward than the front end of member B.

The expression "Member A is located rightward/leftward of member B in a front view of the vehicle," defines a position in the transverse direction Y of member A relative to member B, and a position in the up-down direction Z of member A relative to member B, and does not define a position in the longitudinal direction X of member A relative to member B. This expression means that member A is located more rightward/leftward than member B, that the upper end of member A is located higher than the lower end of member B, and that the lower end of member A is located lower than the upper end of member B.

The straddled vehicle 1 is a scooter type vehicle. The straddled vehicle 1 includes a body frame 3. Fig. 1 shows the body frame 3 in a broken line. The body frame 3 is an underborne frame.

The straddled vehicle 1 includes a steering device 11. The steering device 11 is supported by the body frame 3. The steering device 11 is rotatable relative to the body frame 3.

The steering device 11 has a front suspension 12, a handlebar 13, and a front axle 14. The front suspension 12 is supported by the body frame 3 to be rotatable relative to the body frame 3. The handlebar 13 is directly or indirectly supported by the front suspension 12. The front axle 14 is supported by the front suspension 12. The front axle 14 is located lower than the handlebar 13.

The straddled vehicle 1 includes a front wheel 15. The front wheel 15 is supported by the steering device 11. The front wheel 15 is supported by the front axle 14. The front wheel 15 is rotatable about the front axle 14.

The straddled vehicle 1 includes a headlight 17. The headlight 17 is directly or indirectly supported by the steering device 11. The headlight 17 is located in front of the handlebar 13 in a side view of the vehicle. The headlight 17 illuminates a traveling surface ahead of the straddled vehicle 1.

The straddled vehicle 1 includes a seat 19. The seat 19 is located behind the steering device 11. The seat 19 is directly or indirectly supported by the body frame 3. The seat 19 has a first seat 19a and a second seat 19b. The second seat 19b is located more rearward than the first seat 19a.

The straddled vehicle 1 includes a floor cover 21. The floor cover 21 is located more rearward than the steering device 11 and front wheel 15, and more forward than the seat 19. The floor cover 21 is located lower than the handlebar 13 and seat 19. In the side view of the vehicle, the body frame 3 is dented downward in an area rearward of the steering device 11 and forward of the seat 19.

The straddled vehicle 1 includes a grab bar 23. The grab bar 23 is located in a position overlapping the seat 19 (specifically the second seat 19b) in the side view of the vehicle.

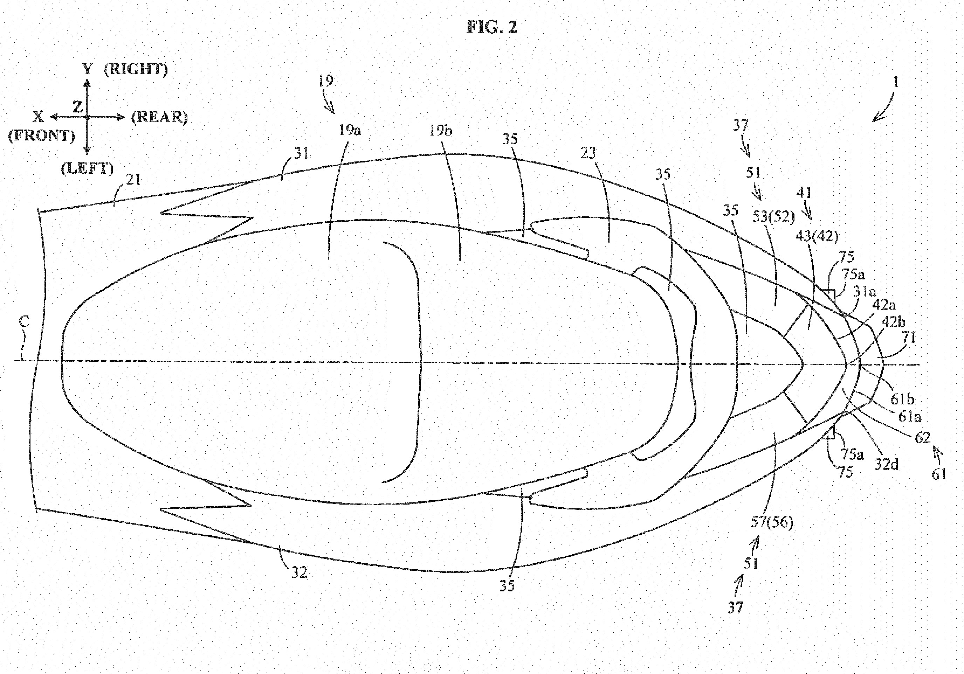

Fig. 2 is a plan view of a rear portion of the straddled vehicle 1. Fig. 2 shows a vehicle center plane C of the straddled vehicle 1. The vehicle center plane C is an imaginary plane. The vehicle center plane C includes the center of the straddled vehicle 1, and is perpendicular to the transverse direction Y.

The grab bar 23 is located rightward, leftward, and rearward of the seat 19 (specifically the second seat 19b) in the plan view of the vehicle. The grab bar 23 is approximately U-shaped in the plan view of the vehicle. The grab bar 23 has a shape curved to protrude rearward in the plan view of the vehicle.

Reference is made to Fig. 1. The straddled vehicle 1 includes a drive unit 25 and a rear wheel 27. The drive unit 25 and rear wheel 27 are located below the seat 19. The drive unit 25 is supported by the body frame 3. The rear wheel 27 is supported by the drive unit 25. Specifically, the drive unit 25 has a front portion and a rear portion. The front portion of the drive unit 25 is swingably supported by the body frame 3. The rear wheel 27 is supported by the rear portion of the drive unit 25. Further, the drive unit 25 rotates the rear wheel 27. Specifically, the drive unit 25 has an engine (not shown) for generating power, and a transmission (not shown) for transmitting the power of the engine to the rear wheel 27. The rear wheel 27 rotates about a rotation center N relative to the drive unit 25. The rotation center N is an imaginary line extending in the transverse direction Y. The rotation center N corresponds to the axis of a rear axle (not shown).

The straddled vehicle 1 includes a muffler 29. The muffler 29 extends in the longitudinal direction X. The muffler 29 is located in a position overlapping the rear wheel 27 in the side view of the vehicle. Note that the muffler 29 is omitted from Fig. 2.

Reference is made to Fig. 2. The straddled vehicle 1 includes a right side cover 31 and a left side cover 32. The right side cover 31 and left side cover 32 are arranged more rearward than the floor cover 21. The right side cover 31 is located rightward of the seat 19 in the plan view of the vehicle. The left side cover 32 is located leftward of the seat 19 in the plan view of the vehicle.

Reference is made to Fig. 1. The left side cover 32 is located below the seat 19 in the side view of the vehicle. The left side cover 32 is located above the drive unit 25 and rear wheel 27 in the side view of the vehicle. The left side cover 32 extends in the longitudinal direction X. The left side cover 32 has a lower edge 32a in the side view of the vehicle. The lower edge 32a of the left side cover 32 is gently curved in the side view of the vehicle. The lower edge 32a of the left side cover 32 is curved to protrude upward in the side view of the vehicle.

The right side cover 31 is located rightward of the left side cover 32. The right side cover 31 overlaps the left side cover 32 in the side view of the vehicle. The right side cover 31 has the same construction and shape as the left side cover 32 except for being bilaterally symmetric.

The straddled vehicle 1 includes a rear top cover 35. The rear top cover 35 is located more rearward and lower than the seat 19. The rear top cover 35 is located above the left side cover 32 in the side view of the vehicle.

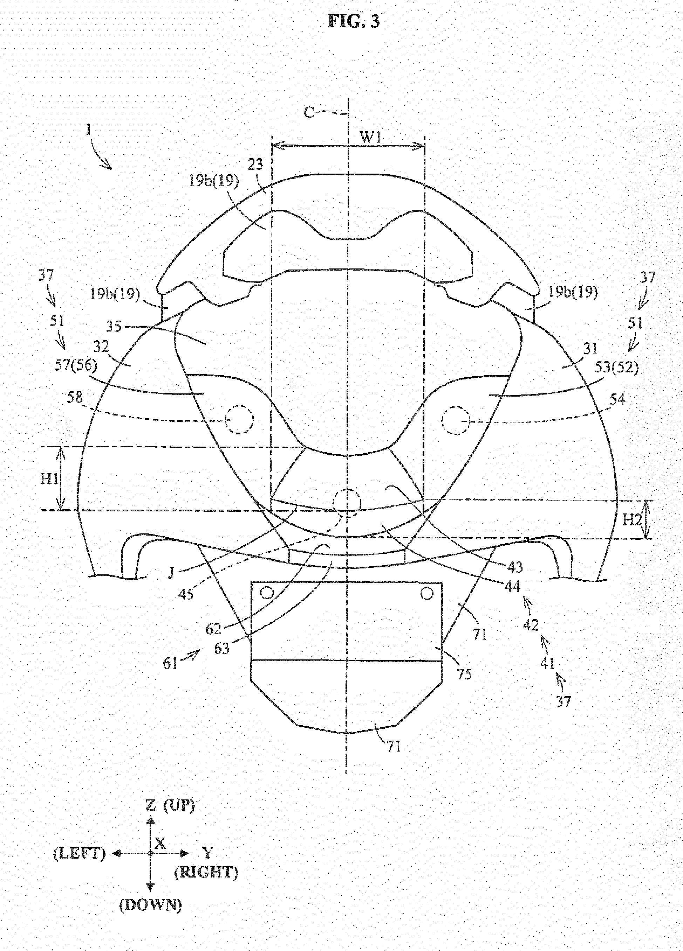

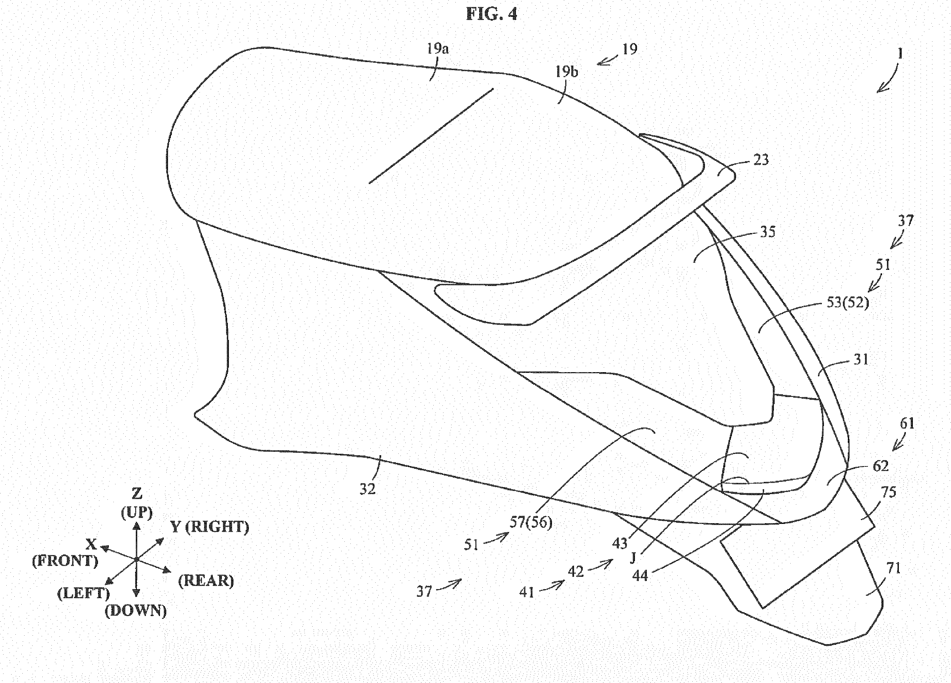

Fig. 3 is a rear view of a portion of the straddled vehicle 1. Fig. 4 is a perspective view of the rear portion of the straddled vehicle 1. The rear top cover 35 is located below the seat 19 in the rear view of the vehicle. The rear top cover 35 is located between the right side cover 31 and left side cover 32. The rear top cover 35 is located leftward of the right side cover 31 and rightward of the left side cover 32.

The straddled vehicle 1 includes a taillight unit 37. The taillight unit 37 is located below the rear top cover 35 in the rear view of the vehicle. The taillight unit 37 is located between the right side cover 31 and left side cover 32. The taillight unit 37 is located leftward of the right side cover 31 and rightward of the left side cover 32.

The taillight unit 37 has a taillight 41. The taillight 41 notifies third parties of the presence of the straddled vehicle 1. For example, even when it is dark around the straddled vehicle 1, the third parties can become aware of the straddled vehicle 1 by the light from the taillight 41. Here, the third parties are persons other than the riders on the straddled vehicle 1. The third parties are, for example, people traveling on vehicles more rearward than the straddled vehicle 1 and people walking more rearward than the straddled vehicle 1. The taillight 41 is turned on as interlocked with the headlight 17. For example, the taillight 41 is turned on when the headlight 17 comes on. The taillight 41 is turned off when the headlight 17 goes out.

Further, the taillight 41 may notify the third parties of brake operations of the straddled vehicle 1. The taillight 41 may be turned on as interlocked with the brake operations of the straddled vehicle 1.

The taillight unit 37 further includes flashers 51. The flashers 51 notify the third parties of course changes of the straddled vehicle 1, for example. The flashers 51 are arranged in a position more rightward than the taillight 41 and in a position more leftward than the taillight 41.

The straddled vehicle 1 includes a rear undercover 61. The rear undercover 61 is located below the taillight unit 37 in the rear view of the vehicle. The rear undercover 61 is located below the taillight 41. The rear undercover 61 is located between the right side cover 31 and left side cover 32. The rear undercover 61 is located leftward of the right side cover 31 and rightward of the left side cover 32.

Reference is made to Fig. 1. The straddled vehicle 1 includes a mud guard 71. The mud guard 71 is connected to the right side cover 31 and left side cover 32. The mud guard 71 is located below the lower edge 32a of the left side cover 32 in the side view of the vehicle. Although not shown, the mud guard 71 is located below a lower edge of the right side cover 31 in a side view of the vehicle. The mud guard 71 extends downward and rearward.

Reference is made to Fig. 3. The mud guard 71 is located below the rear undercover 61 in the rear view of the vehicle.

The straddled vehicle 1 includes a license plate 75. The license plate 75 is supported by the mud guard 71. The license plate 75 is attached to the mud guard 71. The license plate 75 is located below the rear undercover 61 in the rear view of the vehicle. The license plate 75 extends rearward and downward in the side view of the vehicle.

The driver sits on the first seat 19a, puts the feet on the floor cover 21, and grasps the handlebar 13. A passenger sits on the second seat 19b, and grasps the grab bar 23. The driver and passenger are an example of riders on the straddled vehicle 1.

### 2. Body frame 3

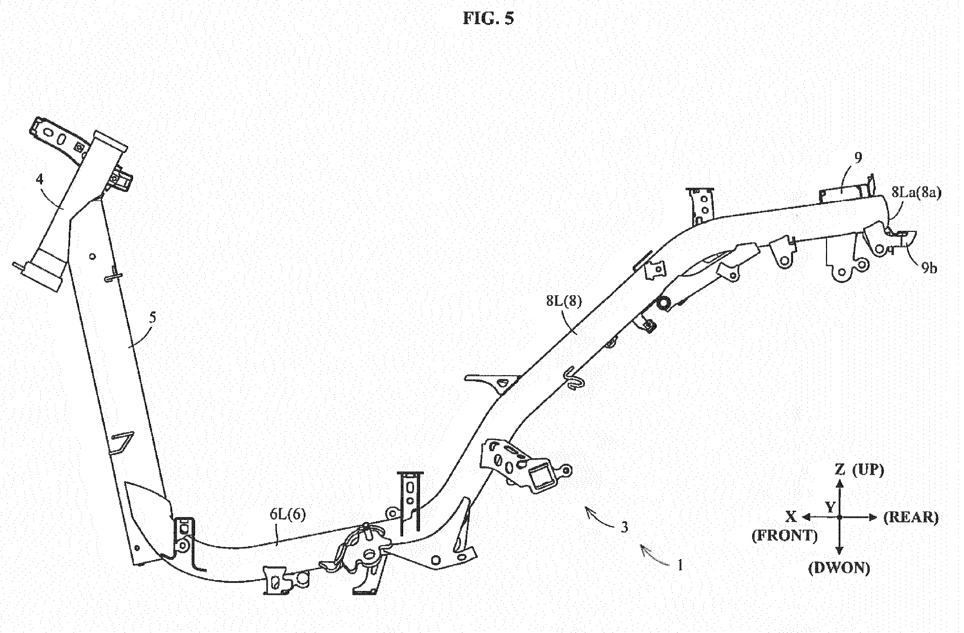

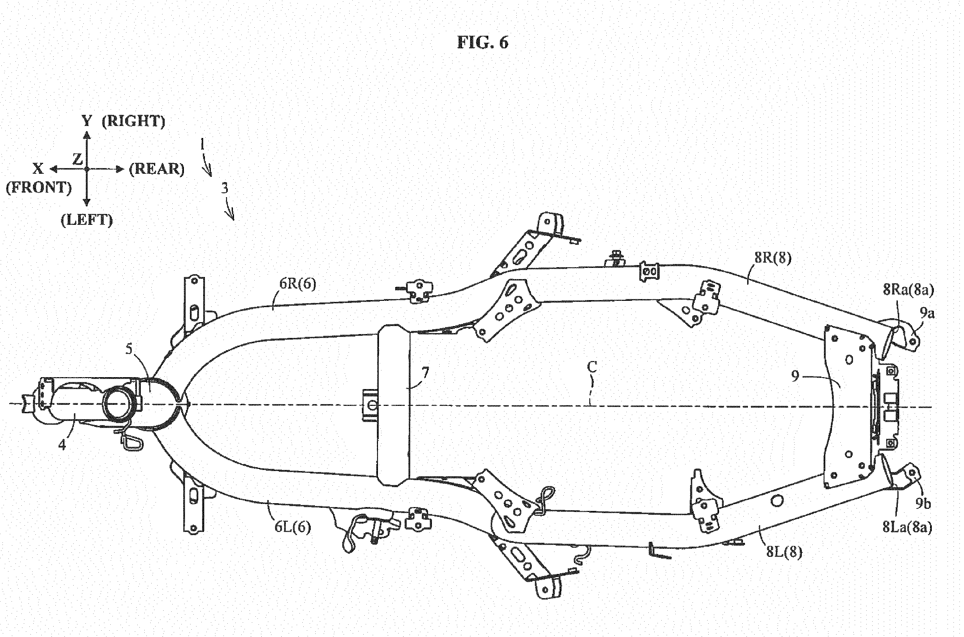

Fig. 5 is a side view of the body frame 3. Fig. 6 is a plan view of the body frame 3. The body frame 3 has a relatively high rigidity. The body frame 3 is made of metal, for example.

The body frame 3 includes a head tube 4. The head tube 4 is located at the front of the straddled vehicle 1.

The body frame 3 includes a down frame 5. The down frame 5 is connected to the head tube 4. The down frame 5 extends downward and rearward from the head tube 4.

The body frame 3 includes a right lower frame 6R and a left lower frame 6L. The right lower frame 6R and left lower frame 6L are connected to the down frame 5. A connecting position of the down frame 5 and left lower frame 6L is lower and more rearward than a connecting position of the head tube 4 and down frame 5. A connecting position of the down frame 5 and right lower frame 6R is substantially the same height position as the connecting position of the down frame 5 and left lower frame 6L. The left lower frame 6L extends leftward and rearward from the down frame 5. The right lower frame 6R extends rightward and rearward from the down frame 5. The right lower frame 6R and left lower frame 6L are located lower than the head tube 4. The right lower frame 6R is located rightward of the left lower frame 6L. The right lower frame 6R overlaps the left lower frame 6L in the side view of the vehicle.

The body frame 3 includes a cross frame 7. The cross frame 7 is connected to the right lower frame 6R and left lower frame 6L. The cross frame 7 is located between the right lower frame 6R and left lower frame 6L. The cross frame 7 is located leftward of the right lower frame 6R and rightward of the left lower frame 6L. The cross frame 7 extends in the transverse direction Y. The cross frame 7 is located more rearward than the head tube 4 and down frame 5. The cross frame 7 is located lower than the head tube 4.

The body frame 3 includes a right seat frame 8R and a left seat frame 8L. The right seat frame 8R is connected to the right lower frame 6R. The right seat frame 8R extends rearward and upward from the right lower frame 6R. The left seat frame 8L is connected to the left lower frame 6L. The left seat frame 8L extends rearward and upward from the left lower frame 6L. The right seat frame 8R and left seat frame 8L are located more rearward than the cross frame 7. The right seat frame 8R is located rightward of the left seat frame 8L. The right seat frame 8R overlaps the left seat frame 8L in the side view of the vehicle.

The body frame 3 includes a bracket 9. The bracket 9 is connected to the right seat frame 8R and left seat frame 8L. The bracket 9 is connected to a rear portion of the right seat frame 8R and a rear portion of the left seat frame 8L. The bracket 9 is located between the right seat frame 8R and left seat frame 8L.

The right seat frame 8R has a rear end 8Ra. The left seat frame 8L has a rear end 8La. The bracket 9 has a first portion 9a and a second portion 9b. The first portion 9a extends more rearward than the rear end 8Ra of the right seat frame 8R. The first portion 9a is located lower than the rear end 8Ra of the right seat frame 8R. The second portion 9b is located leftward of the first portion 9a. The second portion 9b extends more rearward than the rear end 8La of the left seat frame 8L. The second portion 9b is located lower than the rear end 8La of the left seat frame 8L.

Reference is made to Fig. 6. The head tube 4, down frame 5, cross frame 7, and bracket 9 are arranged on the vehicle center plane C. That is, the head tube 4, down frame 5, cross frame 7, and bracket 9 intersect with the vehicle center plane C. The right lower frame 6R and right seat frame 8R are located rightward of the vehicle center plane C. The left lower frame 6L and left seat frame 8L are located leftward of the vehicle center plane C. The first portion 9a of the bracket 9 is located rightward of the vehicle center plane C. The second portion 9b of the bracket 9 is located leftward of the vehicle center plane C.

The left lower frame 6L has the same construction and shape as the right lower frame 6R except for being bilaterally symmetric. The right lower frame 6R and left lower frame 6L, when not distinguished, will be called the lower frames 6.

The left seat frame 8L has the same construction and shape as the right seat frame 8R except for being bilaterally symmetric. The right seat frame 8R and left seat frame 8L, when not distinguished, will be called the seat frames 8. The rear end 8Ra of the right seat frame 8R and the rear end 8La of the left seat frame 8L, when not distinguished, will be called the rear ends 8a of the seat frames 8.

### 3. Support structure for taillight unit 37

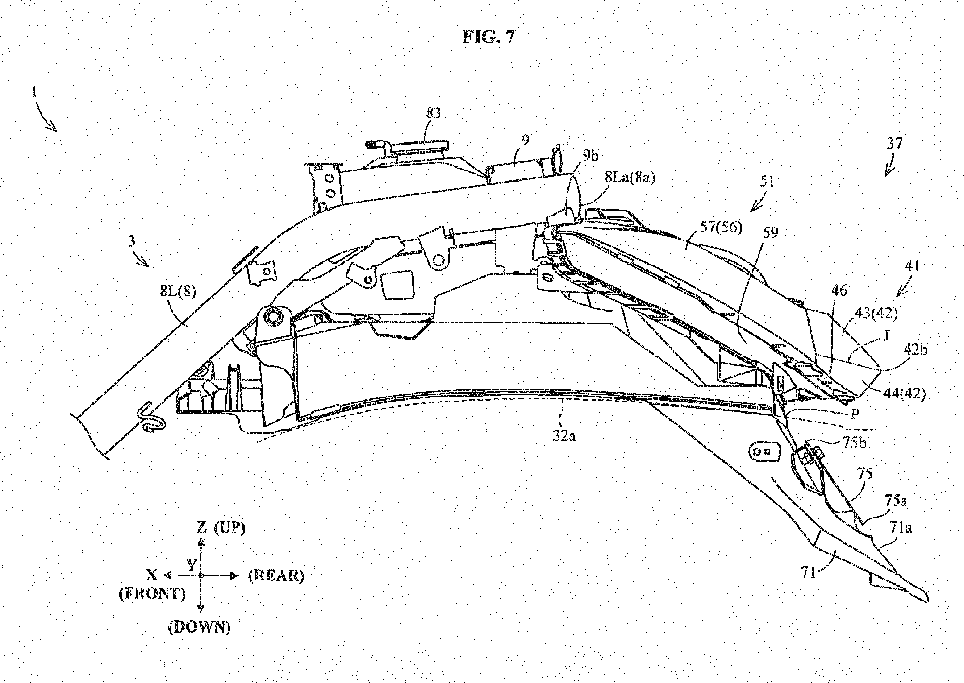

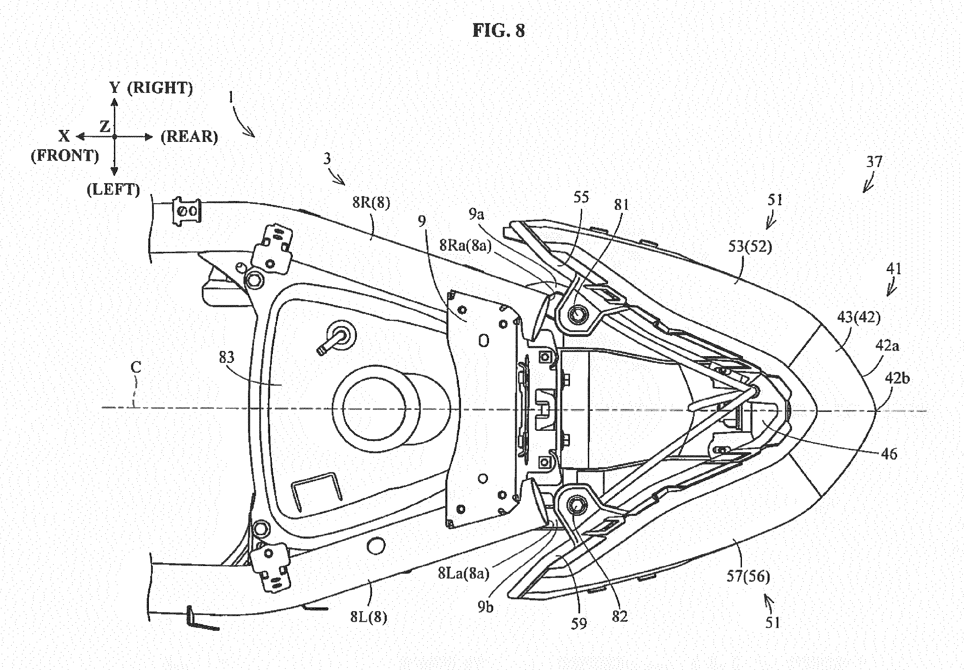

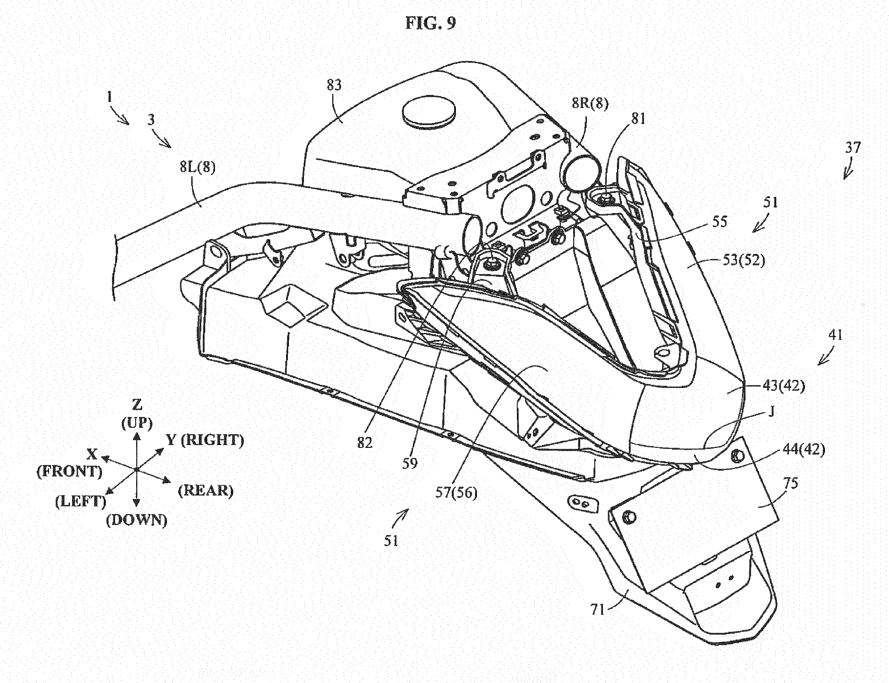

Fig. 7 is a side view showing a support structure for the taillight unit 37. Fig. 8 is a plan view showing the support structure for the taillight unit 37. Fig. 9 is the perspective view showing the support structure for the taillight unit 37. The taillight unit 37 is supported by the body frame 3. The taillight unit 37 is supported by the bracket 9.

Reference is made to Figs. 8 and 9. The straddled vehicle 1 includes joining members 81 and 82 for joining the taillight unit 37 to the body frame 3. The joining members 81 and 82 are bolts, for example. The joining member 81 joins one of the flashers 51 to the first portion 9a of the bracket 9. The joining member 82 joins the other flasher 51 to the second portion 9b of the bracket 9. Consequently, the joining members 81 and 82 join the whole of taillight 41 and flashers 51 to the body frame 3.

The flashers 51 are in contact with the bracket 9. That is, the taillight unit 37 is in contact with the body frame 3. The whole of taillight 41 and flashers 51 is directly joined to the body frame 3. The whole of taillight 41 and flashers 51 is directly supported by the body frame 3.

Reference is made to Fig. 8. The joining members 81 and 82 are, in the plan view of the vehicle, located behind the seat frames 8. The joining members 81 and 82 are located more rearward than the rear ends 8a of the seat frames 8. The joining member 81 is located rightward of the vehicle center plane C in the plan view of the vehicle. The joining member 82 is located leftward of the vehicle center plane C in the plan view of the vehicle.

The steering device 11 is directly or indirectly supported by the head tube 4. The floor cover 21 is directly or indirectly supported by the lower frames 6, for example. The seat 19 and grab bar 23 are directly or indirectly supported by the seat frames 8. The drive unit 25 is directly or indirectly supported by at least either the lower frames 6 or the seat frames 8, for example. The right side cover 31, left side cover 32, rear top cover 35, rear undercover 61, and mud guard 71 are directly or indirectly supported by the seat frames 8.

Reference is made to Fig. 7 - 9. The straddled vehicle 1 includes a fuel tank 83. The fuel tank 83 stores fuel. The fuel tank 83 is supported by the body frame 3. The fuel tank 83 is supported by the seat frames 8.

### 4. Arrangement

Reference is made to Fig. 1. The handlebar 13 and headlight 17 are located higher than the head tube 4. The front axle 14 and front wheel 15 are located lower than the head tube 4. The front axle 14 and front wheel 15 are located in front of the down frame 5 in the side view of the vehicle. The floor cover 21 is, in the side view of the vehicle, located in a position overlapping the lower frames 6, for example. The seat 19 and grab bar 23 are located above the seat frames 8 in the side view of the vehicle. The drive unit 25 and rear wheel 27 are located below the seat frames 8 in the side view of the vehicle. The drive unit 25 and rear wheel 27 are located behind the lower frames 6 in the side view of the vehicle.

The left side cover 32 is located leftward of the seat frames 8. The left side cover 32 overlaps at least part of the seat frames 8 in the side view of the vehicle. Although not shown, the right side cover 31 is located rightward of the seat frames 8. The right side cover 31 overlaps at least part of the seat frames 8 in the side view of the vehicle.

The taillight 41 is located more rearward than the seat frames 8. The taillight 41 is located more rearward than the rear ends 8a of the seat frames 8. The taillight 41 is located lower than the rear ends 8a of the seat frames 8.

At least parts of the flashers 51 are located more rearward than the seat frames 8. At least parts of the flashers 51 are located more rearward than the rear ends 8a of the seat frames 8. The flashers 51 are located lower than the rear ends 8a of the seat frames 8.

Reference is made to Figs. 7-9. The fuel tank 83 is located between the right seat frame 8R and left seat frame 8L. The fuel tank 83 is located leftward of the right seat frame 8R and rightward of the left seat frame 8L. The fuel tank 83 is, in the side view of the vehicle, located in a position overlapping the seat frames 8. The fuel tank 83 is located below the seat 19. The fuel tank 83 is located above the rear wheel 27. Although not shown, the fuel tank 83 is located in a position overlapping the seat 19 in the plan view of the vehicle. The fuel tank 83 is located in a position overlapping the rear wheel 27 in the plan view of the vehicle. The fuel tank 83 is located between the right side cover 31 and left side cover 32. The fuel tank 83 is located leftward of the right side cover 31 and rightward of the left side cover 32. The fuel tank 83 is, in the side view of the vehicle, located in a position overlapping the right side cover 31 and left side cover 32.

Fig. 7 shows the lower edge 32a of the left side cover 32 in a broken line. The whole taillight 41 is located higher than the lower edge 32a of the left side cover 32 in the side view of the vehicle. The whole mud guard 71 is located lower than the lower edge 32a of the left side cover 32 in the side view of the vehicle. The whole license plate 75 is located lower than the lower edge 32a of the left side cover 32 in the side view of the vehicle.

The mud guard 71 intersects with the lower edge 32a of the left side cover 32 in the side view of the vehicle. The mud guard 71 is located lower than the lower edge 32a of the left side cover 32 in the side view of the vehicle as noted above. In this specification, the mud guard 71 does not include any part thereof located higher than the lower edge 32a of the left side cover 32 in the side view of the vehicle. Any member formed integral with the mud guard 71 and located higher than the lower edge 32a of the left side cover 32 in the side view of the vehicle is not called the mud guard 71.

The taillight 41 is not supported by the mud guard 71. The taillight 41 is not attached to the mud guard 71. The taillight 41 is not in contact with the mud guard 71. The taillight 41 is located in a position spaced from the mud guard 71.

Reference is made to Fig. 3. The rear top cover 35, taillight 41, rear undercover 61, mud guard 71, and license plate 75 are arranged on the vehicle center plane C. In the rear view of the vehicle, the rear top cover 35, taillight 41, rear undercover 61, and license plate 75 are arranged in a line in the up-down direction Z. The right side cover 31 is located rightward of the vehicle center plane C. The left side cover 32 is located leftward of the vehicle center plane C. The flashers 51 are located in a position rightward of the vehicle center plane C and in a position leftward of the vehicle center plane C.

The taillight 41 has a first exposed portion 42 visible in the rear view of the vehicle. The first exposed portion 42 corresponds to a portion of the taillight 41 which appears in Fig. 3. One of the flashers 51 has a second exposed portion 52 visible in the rear view of the vehicle. The other flasher 51 has a third exposed portion 56 visible in the rear view of the vehicle. The second exposed portion 52 extends rightward and upward from the first exposed portion 42 in the rear view of the vehicle. The second exposed portion 52 is in contact with the first exposed portion 42 in the rear view of the vehicle. The third exposed portion 56 extends leftward and upward from the first exposed portion 42 in the rear view of the vehicle. The third exposed portion 56 is in contact with the first exposed portion 42 in the rear view of the vehicle. The third exposed portion 56 is not in contact with the second exposed portion 52 in the rear view of the vehicle. The third exposed portion 56 has the same construction and shape as the second exposed portion 52 except for being bilaterally symmetric.

The whole of first exposed portion 42, second exposed portion 52, and third exposed portion 56 is approximately U-shaped or approximately V-shaped in the rear view of the vehicle. The whole of first exposed portion 42, second exposed portion 52, and third exposed portion 56 is curved to protrude downward in the rear view of the vehicle.

The rear undercover 61 is located below the first exposed portion 42 in the rear view of the vehicle. The rear undercover 61 is in contact with the first exposed portion 42 in the rear view of the vehicle. The rear undercover 61 extends in the transverse direction Y in the rear view of the vehicle. The rear undercover 61 extends from a position more rightward than the first exposed portion 42 to a position more leftward than the first exposed portion 42 in the rear view of the vehicle.

Reference is made to Fig. 2. The first exposed portion 42 has a rear edge 42a seen in the plan view of the vehicle. The rear edge 42a is curved to protrude rearward in the plan view of the vehicle.

The first exposed portion 42 has a rear end 42b. The rear end 42b is located on the rear edge 42a in the plan view of the vehicle. The rear end 42b is located on the vehicle center plane C, for example. The rear end 42b is a position where the rear edge 42a and vehicle center plane C intersect with each other, for example.

The rear end 42b of the first exposed portion 42 is located more rearward than the license plate 75. The license plate 75 has a rear end 75a. The rear end 42b of the first exposed portion 42 is located more rearward than the rear end 75a of the license plate 75.

The rear undercover 61 has a rear edge 61a seen in the plan view of the vehicle. The rear edge 61a is curved to protrude rearward in the plan view of the vehicle.

The rear edge 61a of the rear undercover 61 is located behind the rear edge 42a of the first exposed portion 42 in the plan view of the vehicle. The rear undercover 61 overlaps the whole rear edge 42a of the first exposed portion 42 in the plan view of the vehicle. The rear edge 61a of the rear undercover 61 is located more rearward than the license plate 75 in the plan view of the vehicle. The rear edge 61a of the rear undercover 61 is located more rearward than the rear end 75a of the license plate 75 in the plan view of the vehicle.

The rear undercover 61 has a rear end 61b. The rear end 61b is located on the rear edge 61a in the plan view of the vehicle. The rear end 61b is located on the vehicle center plane C. The rear end 61b is a position where the rear edge 61a and vehicle center plane C intersect with each other.

The rear end 61b of the rear undercover 61 is located more rearward than the first exposed portion 42. The rear end 61b of the rear undercover 61 is located more rearward than the rear end 42b of the first exposed portion 42. The rear end 61b of the rear undercover 61 is located more rearward than the license plate 75. The rear end 61b of the rear undercover 61 is located more rearward than the rear end 75a of the license plate 75.

Reference is made to Fig. 1. The rear wheel 27 has a rear end 27a. The first exposed portion 42 is located more rearward than the rear end 27a of the rear wheel 27.

The muffler 29 has a rear end 29a. At least part of the first exposed portion 42 is located more rearward than the rear end 29a of the muffler 29 in the side view of the vehicle. For example, the whole first exposed portion 42 is located more rearward than the rear end 29a of the muffler 29 in the side view of the vehicle.

The first exposed portion 42 is located higher than the lower edge 32a of the left side cover 32 in the side view of the vehicle (see Fig. 7 in addition to Fig. 1).

The third exposed portion 56 extends forward and upward from the first exposed portion 42 in the side view of the vehicle. The third exposed portion 56 is in contact with the first exposed portion 42 in the side view of the vehicle. The third exposed portion 56 is long in the longitudinal direction X. Fig. 1 shows length L1 of the whole of first exposed portion 42 and third exposed portion 56 in the longitudinal direction X. Fig. 1 shows radius R of the rear wheel 27. The radius R corresponds to a distance between rotation center N and rear end 27a in the side view of the vehicle. The length L1 is larger than the radius R.

Although not shown, the second exposed portion 52 extends forward and upward from the first exposed portion 42 in the side view of the vehicle. The second exposed portion 52 is in contact with the first exposed portion 42 in the side view of the vehicle. The second exposed portion 52 is long in the longitudinal direction X. The length in the longitudinal direction X of the whole of first exposed portion 42 and second exposed portion 52 is larger than the radius R. The length in the longitudinal direction X of the whole of first exposed portion 42 and second exposed portion 52 is substantially the same as length L1.

The mud guard 71 has a rear edge 71a seen in the side view of the vehicle. The rear edge 71a of the mud guard 71 extends rearward and downward in the side view of the vehicle.

An intersection of the rear edge 71a of the mud guard 71 and the lower edge 32a of the left side cover 32 in the side view of the vehicle will be called the second intersection P. The second intersection P is located more rearward than the rotation center N of the rear wheel 27 in the side view of the vehicle. The second intersection P is located more forward than the first exposed portion 42 in the side view of the vehicle. The second intersection P is located lower than the first exposed portion 42 in the side view of the vehicle. The second intersection P is located more forward than the license plate 75 in the side view of the vehicle. The license plate 75 has a front end 75b. The second intersection P is located more forward than the front end 75b of the license plate 75 in the side view of the vehicle. The second intersection P is located higher than the license plate 75 in the side view of the vehicle. The second intersection P is located higher than the front end 75b of the license plate 75 in the side view of the vehicle. The lower edge 32a of the left side cover 32 extends more rearward than the second intersection P in the side view of the vehicle.

Although not shown, an intersection of the rear edge 71a of the mud guard 71 and the lower edge of the right side cover 31 in the side view of the vehicle will be called the first intersection. The first intersection is in substantially the same position as the second intersection P in the side view of the vehicle. Consequently, for example, the first intersection is located more forward than the first exposed portion 42 in the side view of the vehicle. The lower edge of the right side cover 31 extends more rearward than the first intersection in the side view of the vehicle.

The left side cover 32 has an upper edge 32b in the side view of the vehicle. The upper edge 32b of the left side cover 32 is curved to protrude upward in the side view of the vehicle. The left side cover 32 has an upper end 32c. The upper end 32c is located on the upper edge 32b in the side view of the vehicle. The upper end 32c of the left side cover 32 is located below a central part of the seat 19 in the side view of the vehicle. The upper end 32c of the left side cover 32 is located more forward than the rotation center N. The left side cover 32 has a rear end 32d. The upper edge 32b of the left side cover 32 extends downward and rearward from the upper end 32c to the rear end 32d in the side view of the vehicle.

The rear end 32d of the left side cover 32 is located more downward and rearward than the seat 19. The rear end 32d of the left side cover 32 is located more downward and rearward than the grab bar 23. The rear end 32d of the left side cover 32 is located more rearward than the rear wheel 27. The rear end 32d of the left side cover 32 is located more rearward than the rear end 27a of the rear wheel 27. The rear end 32d of the left side cover 32 is located higher than the rear wheel 27. The rear end 32d of the left side cover 32 is located more rearward than the second intersection P in the side view of the vehicle.

Reference is made to Figs. 1 and 2. The left side cover 32 extends more rearward than the license plate 75. The rear end 32d of the left side cover 32 is located more rearward than the license plate 75. The rear end 32d of the left side cover 32 is located more rearward than the rear end 75a of the license plate 75. The rear end 32d of the left side cover 32 is located higher than the license plate 75. The rear end 32d of the left side cover 32 is located higher than the front end 75b of the license plate 75.

Reference is made to Fig. 2. The right side cover 31 extends more rearward than the license plate 75. The right side cover 31 has a rear end 31a. The rear end 31a of the right side cover 31 is located more rearward than the license plate 75. The rear end 31a of the right side cover 31 is located more rearward than the rear end 75a of the license plate 75. Although not shown, the rear end 31a of the right side cover 31 is located higher than the license plate 75. The rear end 31a of the right side cover 31 is located higher than the front end 75b of the license plate 75. The rear end 31a of the right side cover 31 is located more rearward than the first intersection in the side view of the vehicle.

### 5. Detailed constructions of taillight unit 37 and rear undercover 61

Reference is made to Fig. 3 and 4. The first exposed portion 42 of the taillight 41 includes a first light transmitting portion 43 having light transmissive properties, and a second light transmitting portion 44 having light transmissive properties. The first light transmitting portion 43 is located above the second light transmitting portion 44. The first light transmitting portion 43 is in contact with the second light transmitting portion 44.

Figs. 3 and 4 show a boundary J between the first light transmitting portion 43 and second light transmitting portion 44. The boundary J extends substantially in the transverse direction Y in the rear view of the vehicle. More particularly, the boundary J is curved to protrude downward in the rear view of the vehicle. The first light transmitting portion 43 extends upward and forward from the boundary J. The second light transmitting portion 44 extends downward and forward from the boundary J. The boundary J is in the same position as the above-noted rear edge 42a in the plan view of the vehicle.

The second light transmitting portion 44 is long in the transverse direction Y. Fig. 3 shows length W1 of the second light transmitting portion 44 in the transverse direction Y. Fig. 3 shows length H2 of the second light transmitting portion 44 in the up-down direction Z. Length W1 is larger than length H2.

The first light transmitting portion 43 is also long in the transverse direction Y. The length of the first light transmitting portion 43 in the transverse direction Y is substantially the same as length W1. Fig. 3 shows length H1 of the first light transmitting portion 43 in the up-down direction Z. The length of the first light transmitting portion 43 in the transverse direction Y is larger than length H1.

The first light transmitting portion 43 is larger than the second light transmitting portion 44. Length H1 is larger than length H2.

In rear view of the vehicle, the first light transmitting portion 43 has larger dimensions than the second light transmitting portion 44. In other words, the first light transmitting portion 43 has larger back projected dimensions than the second light transmitting portion 44. Here, the back projected dimensions are dimensions of an area of the first light transmitting portion 43 / second light transmitting portion 44 projected on a projection plane perpendicular to the longitudinal direction X.

The first light transmitting portion 43 and second light transmitting portion 44 are clear covers, for example. The first light transmitting portion 43 and second light transmitting portion 44 are not colorless but have a color, for example. The first light transmitting portion 43 and second light transmitting portion 44 have a color other than white, for example. The first light transmitting portion 43 and second light transmitting portion 44 are red-colored, for example.

The second exposed portion 52 of the flashers 51 includes a fourth light transmitting portion 53 having light transmissive properties. The fourth light transmitting portion 53 corresponds to the whole of second exposed portion 52, for example. The third exposed portion 56 of the flashers 51 has a fifth light transmitting portion 57 having light transmissive properties. The fifth light transmitting portion 57 corresponds to the whole of third exposed portion 56, for example.

The fourth light transmitting portion 53 and fifth light transmitting portion 57 are clear covers, for example. The fourth light transmitting portion 53 and fifth light transmitting portion 57 are not colorless but have a color, for example. The fourth light transmitting portion 53 and fifth light transmitting portion 57 have a color other than white, for example. The fourth light transmitting portion 53 and fifth light transmitting portion 57 are red-colored, for example.

The first light transmitting portion 43, second light transmitting portion 44, fourth light transmitting portion 53, and fifth light transmitting portion 57 are formed integral, for example. The first light transmitting portion 43, second light transmitting portion 44, fourth light transmitting portion 53, and fifth light transmitting portion 57 are inseparable from one another, for example. The first light transmitting portion 43, second light transmitting portion 44, fourth light transmitting portion 53, and fifth light transmitting portion 57 are formed of one inseparable clear cover, for example.

The rear undercover 61 has a light blocking effect. Light does not substantially penetrate the rear undercover 61. The rear undercover 61 is formed of an opaque material. The rear undercover 61 is formed of a colored synthetic resin, for example.

The rear undercover 61 has a first portion 62. The first portion 62 of the rear undercover 61 is visible in the rear view of the vehicle. The first portion 62 of the rear undercover 61 is located below the second light transmitting portion 44 in the rear view of the vehicle. The first portion 62 of the rear undercover 61 is in contact with the second light transmitting portion 44 in the rear view of the vehicle. The first portion 62 of the rear undercover 61 extends in the transverse direction Y in the rear view of the vehicle. The first portion 62 of the rear undercover 61 extends from a position more rightward than the second light transmitting portion 44 to a position more leftward than the second light transmitting portion 44 in the rear view of the vehicle. The first portion 62 of the rear undercover 61 is located above the license plate 75 in the rear view of the vehicle. The first portion 62 of the rear undercover 61 is not in contact with the license plate 75 in the rear view of the vehicle.

The rear undercover 61 has a second portion 63. The second portion 63 of the rear undercover 61 is visible in the rear view of the vehicle. The second portion 63 of the rear undercover 61 is located below the first portion 62 in the rear view of the vehicle. The second portion 63 of the rear undercover 61 is in contact with the first portion 62 of the rear undercover 61 in the rear view of the vehicle. The second portion 63 of the rear undercover 61 is located above the license plate 75. The second portion 63 of the rear undercover 61 is not in contact with the license plate 75 in the rear view of the vehicle.

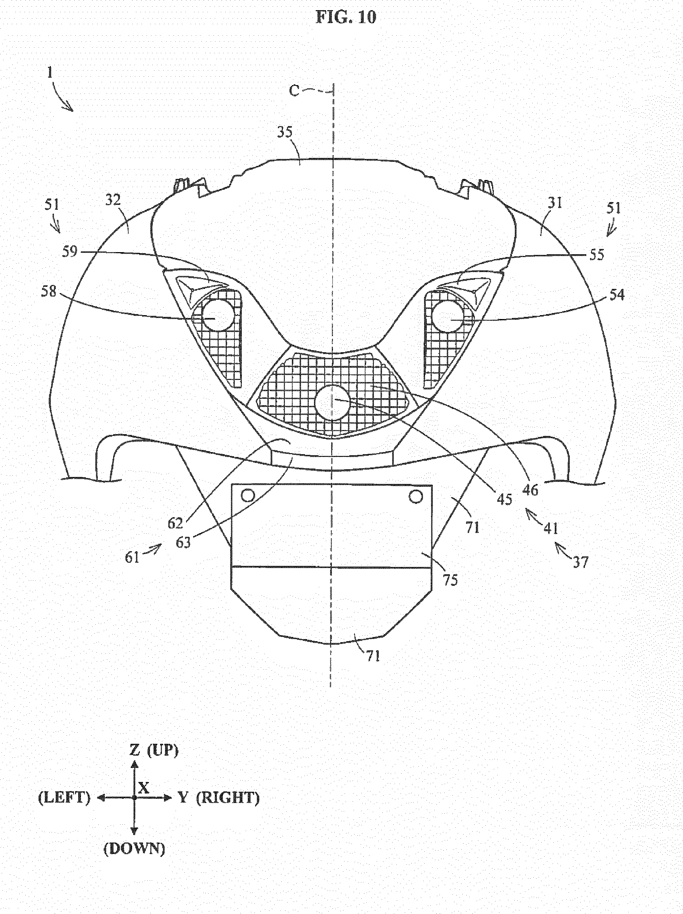

Fig. 10 is a rear view of the taillight unit 37. Fig. 10 omits illustration of the first exposed portion 42 of the taillight 41. Fig. 10 omits illustration of the second exposed portion 52 and third exposed portion 56 of the flashers 51.

The taillight 41 has a first light source 45. The first light source 45 emits light. The first light source 45 is an electric bulb, for example. The first light source 45 is located on the vehicle center plane C. The first light source 45 is located more forward than the first exposed portion 42. The first light source 45 is located more forward than the first light transmitting portion 43. The first light source 45 is located more forward than the second light transmitting portion 44. The first light source 45 is an example of the light source in the present teaching.

The taillight 41 has a first housing 46. The first housing 46 is, in the rear view of the vehicle, located in a position overlapping the first exposed portion 42 and first light source 45. The first housing 46 contains the first light source 45. The first housing 46 supports the first light source 45. The first housing 46 is open rearward. The first housing 46 is located in front of the first exposed portion 42. The first housing 46 supports the first exposed portion 42.

One of the flashers 51 has a second light source 54. The second light source 54 emits light. The second light source 54 is an electric bulb, for example. The second light source 54 is located rightward of the vehicle center plane C. The second light source 54 is located more rightward and higher than the first light source 45 in the rear view of the vehicle. The second light source 54 is located more forward than the second exposed portion 52. The second light source 54 is located more forward than the fourth light transmitting portion 53.

One of the flashers 51 has a second housing 55. The second housing 55 is, in the rear view of the vehicle, located in a position overlapping the second exposed portion 52 and second light source 54. The second housing 55 is located more rightward and higher than the first housing 46 in the rear view of the vehicle. The second housing 55 contains the second light source 54. The second housing 55 supports the second light source 54. The second housing 55 is open rearward. The second housing 55 is located in front of the second exposed portion 52. The second housing 55 supports the second exposed portion 52.

The other flasher 51 has a third light source 58. The third light source 58 emits light. The third light source 58 is an electric bulb, for example. The third light source 58 is located leftward of the vehicle center plane C. The third light source 58 is located more leftward and higher than the first light source 45 in the rear view of the vehicle. The third light source 58 is located in substantially the same height position as the second light source 54. The third light source 58 is located leftward of the second light source 54 in the rear view of the vehicle. The third light source 58 is located more forward than the third exposed portion 56. The third light source 58 is located more forward than the fifth light transmitting portion 57.

The other flasher 51 has a third housing 59. The third housing 59 is, in the rear view of the vehicle, located in a position overlapping the third exposed portion 56 and third light source 58. The third housing 59 is located more leftward and higher than the first housing 46 in the rear view of the vehicle. The third housing 59 contains the third light source 58. The third housing 59 supports the third light source 58. The third housing 59 is open rearward. The third housing 59 is located in front of the third exposed portion 56. The third housing 59 supports the third exposed portion 56.

Reference is made to Figs. 8 and 9. The second housing 55 is fastened to the body frame 3 by the joining member 81. The third housing 59 is fastened to the body frame 3 by the joining member 82. The first housing 46 is connected to the second housing 55 and third housing 59. The whole of taillight 41 and flashers 51 is therefore joined to the body frame 3 by the joining members 81 and 82.

The first housing 46, second housing 55, and third housing 59 are formed integral, for example. The first housing 46, second housing 55, and third housing 59 are inseparable from one another, for example.

Fig. 3 shows the first light source 45, second light source 54, and third light source 58 in broken lines. The first light source 45 overlaps the first exposed portion 42 in the rear view of the vehicle. The first light source 45 overlaps the first light transmitting portion 43 in the rear view of the vehicle. The first light source 45 overlaps the second light transmitting portion 44 in the rear view of the vehicle. The second light source 54 overlaps the second exposed portion 52 in the rear view of the vehicle. The second light source 54 overlaps the fourth light transmitting portion 53 in the rear view of the vehicle. The third light source 58 overlaps the third exposed portion 56 in the rear view of the vehicle. The third light source 58 overlaps the fifth light transmitting portion 57 in the rear view of the vehicle.

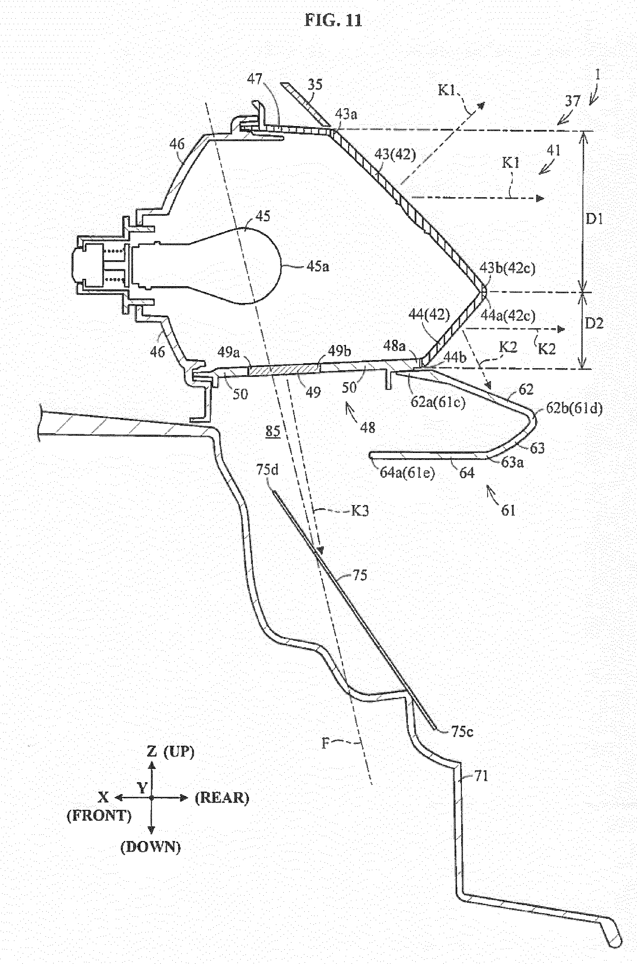

Fig. 11 is a sectional view taken through a vehicle center of the rear portion of the straddled vehicle 1. A vehicle center section is a section along the vehicle center plane C. That is, the vehicle center section includes the center of the straddled vehicle 1, and is perpendicular to the transverse direction Y.

The first exposed portion 42 has a rear end 42c in the vehicle center section. The rear end 42c of the first exposed portion 42 in the vehicle center section is in the same position as the rear end 42b of the first exposed portion 42 noted hereinbefore.

The first light transmitting portion 43 extends downward and rearward in the vehicle center section. The first light transmitting portion 43 linearly extends downward and rearward in the vehicle center section.

The first light transmitting portion 43 has an upper end 43a in the vehicle center section. The first light transmitting portion 43 has a rear end 43b in the vehicle center section. The rear end 43b of the first light transmitting portion 43 is located lower and more rearward than the upper end 43a of the first light transmitting portion 43 in the vehicle center section. The first light transmitting portion 43 extends from the upper end 43a to the rear end 43b in the vehicle center section.

The second light transmitting portion 44 extends downward and forward from the rear end 43b of the first light transmitting portion 43 in the vehicle center section. The second light transmitting portion 44 linearly extends downward and forward in the vehicle center section. The second light transmitting portion 44 is in contact with the first light transmitting portion 43 in the vehicle center section.

The second light transmitting portion 44 has a rear end 44a in the vehicle center section. The second light transmitting portion 44 has a lower end 44b in the vehicle center section. The rear end 44a of the second light transmitting portion 44 is in contact with the rear end 43b of the first light transmitting portion 43. The lower end 44b of the second light transmitting portion 44 is located lower and more forward than the rear end 44a of the second light transmitting portion 44 in the vehicle center section. The second light transmitting portion 44 extends from the rear end 44a to the lower end 44b in the side view of the vehicle.

The rear end 44a of the second light transmitting portion 44 is in substantially the same position as the rear end 43b of the first light transmitting portion 43 in the vehicle center section. The rear end 43b of the first light transmitting portion 43 and the rear end 44a of the second light transmitting portion 44 correspond to the rear end 42c of the first exposed portion 42 in the vehicle center section.

The second light transmitting portion 44 is smaller in length than the first light transmitting portion 43 in the vehicle center section. In the vehicle center section, the distance in a straight line between the upper end 43a and rear end 43b of the first light transmitting portion 43 is larger than the distance in a straight line between the rear end 44a and lower end 44b of the second light transmitting portion 44. Fig. 11 shows difference D1, in the vehicle center section, between a height position of the upper end 43a of the first light transmitting portion 43 and a height position of the rear end 43b of the first light transmitting portion 43. Fig. 11 shows difference D2, in the vehicle center section, between a height position of the rear end 44a of the second light transmitting portion 44 and a height position of the lower end 44b of the second light transmitting portion 44. Difference D1 is larger than difference D2.

The lower end 44b of the second light transmitting portion 44 is located more rearward than the upper end 43a of the first light transmitting portion 43 in the vehicle center section.

The taillight 41 has an upper part 47 invisible in the rear view of the vehicle. The upper part 47 is located higher than the first light source 45. The upper part 47 extends forward from the upper end 43a of the first light transmitting portion 43 in the vehicle center section. The upper part 47 extends substantially horizontally in the vehicle center section. The upper part 47 is connected to the first housing 46 in the vehicle center section.

The taillight 41 has a bottom 48 invisible in the rear view of the vehicle. The bottom 48 is located lower than the first light source 45. The bottom 48 extends forward from the lower end 44b of the second light transmitting portion 44 in the vehicle center section. The bottom 48 is in contact with the second light transmitting portion 44 in the vehicle center section. The bottom 48 extends substantially horizontally in the vehicle center section. The bottom 48 is connected to the first housing 46 in the vehicle center section.

The bottom 48 has a rear end 48a in the vehicle center section. The rear end 48a of the bottom 48 is in contact with the lower end 44b of the second light transmitting portion 44.

The bottom 48 includes a third light transmitting portion 49 having light transmissive properties. The third light transmitting portion 49 is a part of the bottom 48. The third light transmitting portion 49 is a clear cover, for example. The third light transmitting portion 49 is colorless or white, for example.

The bottom 48 has a shielding portion 50. The shielding portion 50 has a light blocking effect. Light does not substantially penetrate the shielding portion 50. The shielding portion 50 is a part of the bottom 48 other than the third light transmitting portion 49. The shielding portion 50 is located around the third light transmitting portion 49.

The third light transmitting portion 49 is located below the first light source 45 in the vehicle center section. The first light source 45 has a rear end 45a in the vehicle center section. In the vehicle center section, the third light transmitting portion 49 extends from a position more forward than the rear end 45a of the first light source 45 to a position more rearward than the rear end 45a of the first light source 45. The third light transmitting portion 49 has a front end 49a and a rear end 49b in the vehicle center section. The front end 49a of the third light transmitting portion 49 is located more forward than the rear end 45a of the first light source 45 in the vehicle center section. The rear end 49b of the third light transmitting portion 49 is located more rearward than the rear end 45a of the first light source 45 in the vehicle center section. The third light transmitting portion 49 extends from the front end 49a to the rear end 49b in the vehicle center section.

The rear top cover 35 extends upward and forward from the upper end 43a of the first light transmitting portion 43 in the vehicle center section. The rear top cover 35 has substantially the same inclination as that of the first light transmitting portion 43 in the vehicle center section. The rear top cover 35 is located on an extension of the first light transmitting portion 43 in the vehicle center section. The rear top cover 35 is continuous with the first light transmitting portion 43 without a level difference in the vehicle center section.

The rear undercover 61 is located lower than the first exposed portion 42 in the vehicle center section.

The rear undercover 61 has an upper end 61c, a rear end 61d, and a front end 61e in the vehicle center section.

The rear end 61d of the rear undercover 61 is located more rearward than the rear end 42c of the first exposed portion 42 in the vehicle center section. The rear end 61d of the rear undercover 61 is located lower than the rear end 42c of the first exposed portion 42 in the vehicle center section. The rear end 61d of the rear undercover 61 in the vehicle center section is the same position as the rear end 61b of the rear undercover 61 noted hereinbefore.

The front end 61e of the rear undercover 61 is located more rearward than the third light transmitting portion 49 in the vehicle center section. The front end 61e of the rear undercover 61 is, in the vehicle center section, located more rearward than the rear end 49b of the third light transmitting portion 49. The front end 61e of the rear undercover 61 is, in the vehicle center section, located more forward than the lower end 44b of the second light transmitting portion 44 and the rear end 48a of the bottom 48.

The first portion 62 of the rear undercover 61, in the vehicle center section, extends downward and rearward from the lower end 44b of the second light transmitting portion 44 and the rear end 48a of the bottom 48.

The first portion 62 of the rear undercover 61 is in contact with the rear end 48a of the bottom 48 in the vehicle center section. The first portion 62 of the rear undercover 61 has an upper end 62a in the vehicle center section. The upper end 62a of the first portion 62 is in contact with the rear end 48a of the bottom 48. The upper end 62a of the first portion 62 corresponds to the upper end 61c of the rear undercover 61 in the vehicle center section.

The first portion 62 of the rear undercover 61 extends to a position more rearward than the rear end 44a of the second light transmitting portion 44 in the vehicle center section. The first portion 62 of the rear undercover 61 extends to a position more rearward than the rear end 42c of the first exposed portion 42 in the vehicle center section. The first portion 62 of the rear undercover 61 has a rear end 62b in the vehicle center section. The rear end 62b of the first portion 62 is, in the vehicle center section, located more rearward than the rear end 44a of the second light transmitting portion 44. The rear end 62b of the first portion 62 is, in the vehicle center section, located lower than the rear end 44a of the second light transmitting portion 44. The rear end 62b of the first portion 62 corresponds to the rear end 61d of the rear undercover 61 in the vehicle center section.

The second portion 63 of the rear undercover 61 extends downward and forward from the rear end 62b of the first portion 62 in the vehicle center section. The second portion 63 has a lower end 63a in the vehicle center section.

The rear undercover 61 has a third portion 64 invisible in the rear view of the vehicle. The third portion 64 of the rear undercover 61 extends forward from the lower end 63a of the second portion 63 in the vehicle center section. The third portion 64 of the rear undercover 61 extends substantially horizontally in the vehicle center section.

The third portion 64 of the rear undercover 61 extends to a position more forward than the first portion 62 of the rear undercover 61 in the vehicle center section. The third portion 64 of the rear undercover 61 has a front end 64a in the vehicle center section. The front end 64a of the third portion 64 is located more forward than the upper end 62a of the first portion 62 in the vehicle center section. The front end 64a of the third portion 64 corresponds to the front end 61e the rear undercover 61 in the vehicle center section.

The license plate 75 is located lower than the taillight 41 in the vehicle center section. The license plate 75 is located lower than the bottom 48 in the vehicle center section. The license plate 75 is located lower than the rear undercover 61 in the vehicle center section.

The license plate 75 extends downward and rearward in the vehicle center section. The license plate 75 has a rear end 75c and a front end 75d in the vehicle center section. The rear end 75c of the license plate 75 is, in the vehicle center section, located in substantially the same position as the rear end 75a of the license plate 75 noted hereinbefore. The front end 75d of the license plate 75 is, in the vehicle center section, located in substantially the same position as the front end 75b of the license plate 75 noted hereinbefore.

The rear end 42c of the first exposed portion 42 is located more rearward than the license plate 75 in the vehicle center section. The rear end 42c of the first exposed portion 42 is located more rearward than the rear end 75c of the license plate 75 in the vehicle center section.

The third light transmitting portion 49 is located above the license plate 75 in the vehicle center section. At least part of the third light transmitting portion 49 is, in the vehicle center section, located more rearward than the front end 75d of the license plate 75 and more forward than the rear end 75c of the license plate 75. The third light transmitting portion 49, in the vehicle center section, extends from a position more forward than the front end 75d of the license plate 75 to a position more rearward than the front end 75d of the license plate 75. Specifically, the front end 49a of the third light transmitting portion 49 is located more forward than the front end 75d of the license plate 75 in the vehicle center section. The rear end 49b of the third light transmitting portion 49 is, in the vehicle center section, located more rearward than the front end 75d of the license plate 75 and more forward than the rear end 75c of the license plate 75.

The third light transmitting portion 49 is, in the vehicle center section, located on an imaginary straight line F linking the first light source 45 and license plate 75. The imaginary straight line F substantially extends in the up-down direction Z in the vehicle center section.

The straddled vehicle 1 includes a first space 85 which, in the vehicle center section, linearly extends from the third light transmitting portion 49 to the license plate 75. The first space 85 is located between the third light transmitting portion 49 and license plate 75. The first space 85 is located below the third light transmitting portion 49 and above the license plate 75. The first space 85 extends along the imaginary straight line F in the vehicle center section. The first space 85 substantially linearly extends in the up-down direction Z in the vehicle center section.

The rear end 61d of the rear undercover 61 is located more rearward than the license plate 75 in the vehicle center section. The rear end 61d of the rear undercover 61 is located more rearward than the rear end 75c of the license plate 75 in the vehicle center section.

The rear end 62b of the first portion 62 of the rear undercover 61 is located more rearward than the license plate 75 in the vehicle center section. The rear end 62b of the first portion 62 of the rear undercover 61 is located more rearward than the rear end 75c of the license plate 75 in the vehicle center section.

At least part of the rear undercover 61 is located more forward than the rear end 75c of the license plate 75 in the vehicle center section. The front end 61e of the rear undercover 61 is located more forward than the rear end 75c of the license plate 75 in the vehicle center section.

The rear undercover 61 is located more rearward than the front end 75d of the license plate 75 in the vehicle center section. The front end 61e of the rear undercover 61 is located more rearward than the front end 75d of the license plate 75 in the vehicle center section.

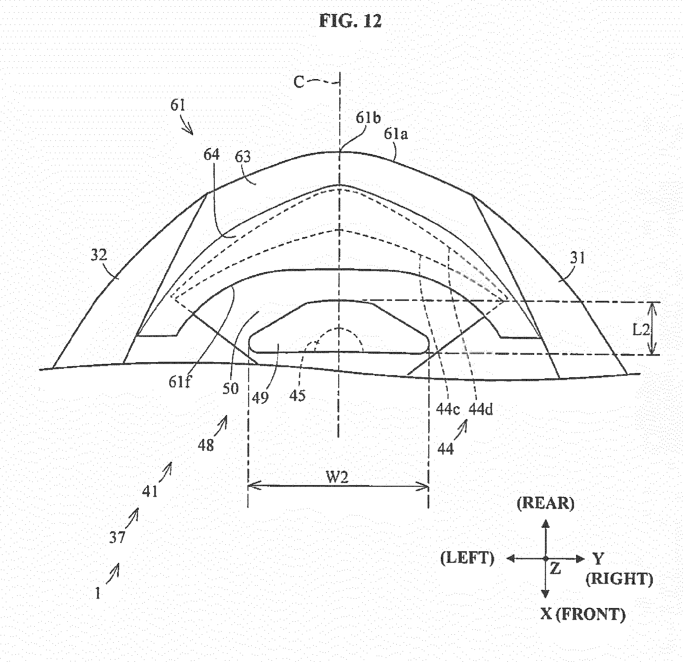

Fig. 12 is a bottom plan view of the taillight 41 and rear undercover 61. Fig. 12 omits illustration of the mud guard 71 and license plate 75. The rear undercover 61 overlaps the whole second light transmitting portion 44 in a vehicle bottom view.

The second light transmitting portion 44 has a front edge 44c and a rear edge 44d seen in the vehicle bottom view. Fig. 12 shows the front edge 44c and rear edge 44d of the second light transmitting portion 44 in broken lines. The rear edge 44d of the second light transmitting portion 44 is in the same position as the rear edge 42a of the first exposed portion 42 in the plan view of the vehicle. The second light transmitting portion 44 extends from the front edge 44c to the rear edge 44d in the vehicle bottom view.

The rear undercover 61 has a front edge 61f seen in the vehicle bottom view. The front edge 61f of the rear undercover 61 is located more forward than the front edge 44c of the second light transmitting portion 44 in the vehicle bottom view. The rear edge 61a of the rear undercover 61 is located more rearward than the rear edge 44d of the second light transmitting portion 44 in the vehicle bottom view. The rear undercover 61 extends from the front edge 61f to the rear edge 61a.

The rear undercover 61 is, in the vehicle bottom view, located in a position not overlapping at least part of third light transmitting portion 49. For example, the rear undercover 61 is, in the vehicle bottom view, located in a position not overlapping the whole third light transmitting portion 49. For example, the rear undercover 61 does not have a portion overlapping the third light transmitting portion 49 in the vehicle bottom view. The front edge 61f of the rear undercover 61 is located behind the third light transmitting portion 49 in the vehicle bottom view. For example, the whole third light transmitting portion 49 is located in front of the front edge 61f of the rear undercover 61 in the vehicle bottom view.

The third light transmitting portion 49 is long in the transverse direction Y. Fig. 12 shows length W2 in the transverse direction Y of the third light transmitting portion 49. Fig. 12 shows length L2 in the longitudinal direction X of the third light transmitting portion 49. Length W2 is larger than length L2.

The third light transmitting portion 49 is located in a position overlapping at least part of the first light source 45 in the vehicle bottom view. Fig. 12 shows the first light source 45 in a broken line.

Reference is made to Fig. 19. The first light source 45 illuminates the first light transmitting portion 43, second light transmitting portion 44, and license plate 75. Specifically, part of the light from the first light source 45 passes through the first light transmitting portion 43 and second light transmitting portion 44 to be emitted rearward of the taillight 41. The first light transmitting portion 43 and second light transmitting portion 44 emit the light from the first light source 45. The first light transmitting portion 43 and second light transmitting portion 44 correspond to the light-emitting surfaces of the taillight 41. Other part of the light from the first light source 45 passes through the third light transmitting portion 49 to be emitted downward of the taillight 41. The light emitted from the third light transmitting portion 49 illuminates the license plate 75. Thus, the first light source 45 illuminates both the light-emitting surfaces of the taillight 41 and the license plate 75.

Since the third light transmitting portion 49 is invisible in the rear view, the third light transmitting portion 49 does not correspond to a light-emitting surface of the taillight 41.

Here, the light emitted from the first light transmitting portion 43 will be called "first light K1". The light emitted from the second light transmitting portion 44 will be called "second light K2". The light emitted from the third light transmitting portion 49 will be called "third light K3". The first light K1, second light K2, and third light K3 are all provided by the first light source 45.

The first light K1 travels rearward from the first light transmitting portion 43. Since the first light transmitting portion 43 extends rearward and downward in the vehicle center section, part of the first light K1 travels rearward and upward from the first light transmitting portion 43.

The second light K2 travels rearward from the second light transmitting portion 43. Since the second light transmitting portion 44 extends downward and forward in the vehicle center section, part of the second light K2 travels rearward and downward from the second light transmitting portion 44. The part of the second light K2 therefore reaches the first portion 62 of the rear undercover 61. Consequently, the part of the second light K2 illuminates the first portion 62 of the rear undercover 61.

The third light K3 travels downward from the third light transmitting portion 49. The third light K3 passes through the first space 85, and strikes upon the license plate 75. That is, the third light K3 illuminates the license plate 75. However, the first light K1 and second light K2 do not easily strike upon the license plate 75. This is because the first light K1 and second light K2 are blocked by the rear undercover 61.

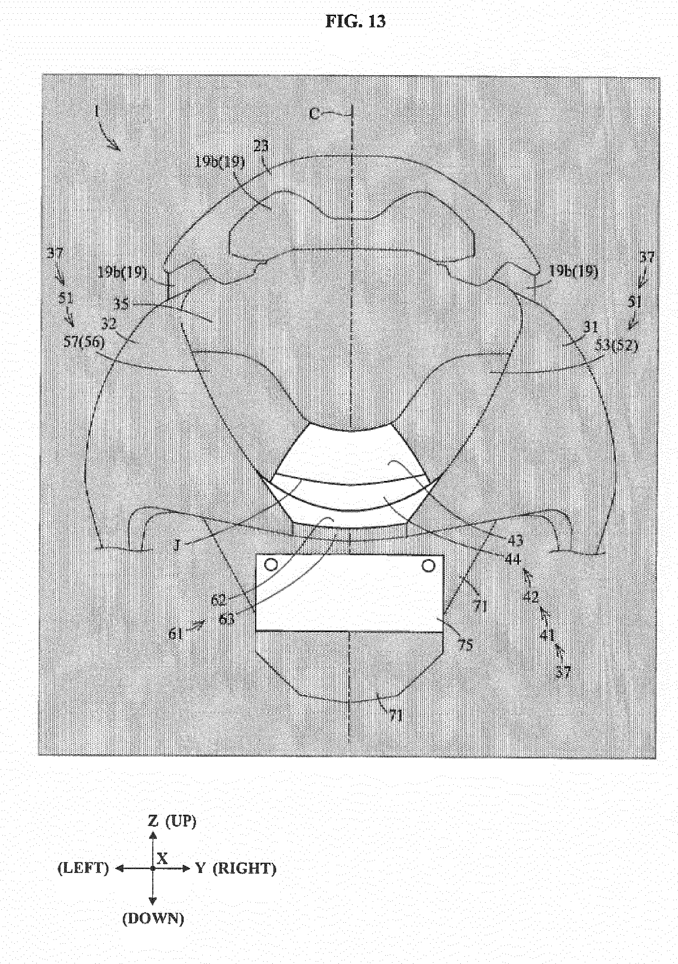

Fig. 13 is a rear view of a portion of the straddled vehicle 1 schematically showing areas which appear bright when the taillight 41 is on. For example, even when it is dark around the straddled vehicle 1, the first light transmitting portion 43, second light transmitting portion 44, first portion 62, and license plate 75 are bright in the rear view of the vehicle. The first light transmitting portion 43, second light transmitting portion 44, first portion 62, and license plate 75, in the rear view of the vehicle, appear bright to third parties. Here, the brightness of the first portion 62 need not be equivalent to the brightness of the first light transmitting portion 43 and second light transmitting portion 44. The brightness of the first portion 62 may be lower than the brightness of the first light transmitting portion 43 and second light transmitting portion 44. Similarly, the brightness of the license plate 75 need not be equivalent to the brightness of the first light transmitting portion 43 and second light transmitting portion 44.

On the other hand, the second portion 63 is not bright in the rear view of the vehicle. That is, the second portion 63 is dark. The second portion 63 is darker than the first light transmitting portion 43, second light transmitting portion 44, first portion 62, and license plate 75. The second portion 63 does not appear bright in the rear view of the vehicle to third parties. This is because the light from the first light source 45 hardly strikes upon the second portion 63. That is, the first light source 45 does not illuminate the second portion 63.

For the same reason, the right side cover 31, left side cover 32, and rear top cover 35 are not bright in the rear view of the vehicle, either. That is, the right side cover 31, left side cover 32, and rear top cover 35 are also dark in the rear view of the vehicle. The right side cover 31, left side cover 32, and rear top cover 35 do not appear bright to third parties, either.

### 6. Advantageous effects of the embodiment

The taillight 41 includes the light source 45 and first exposed portion 42. The first exposed portion 42 is visible in a rear view of the vehicle. The first exposed portion 42 has the first light transmitting portion 43 and second light transmitting portion 44. The first light transmitting portion 43 and second light transmitting portion 44 are located more rearward than the light source 45. The first light transmitting portion 43 and second light transmitting portion 44 have light transmissive properties. The first light transmitting portion 43 extends downward and rearward in a vehicle center section. The second light transmitting portion 44 extends downward and forward from the rear end 43b of the first light transmitting portion 43 in the vehicle center section. The light source 45 therefore illuminates the first light transmitting portion 43 and second light transmitting portion 44. The first light transmitting portion 43 emits the first light K1. The second light transmitting portion 44 emits the second light K2. The first light transmitting portion 43 and second light transmitting portion 44 correspond to the light-emitting surfaces of the taillight 41.

The taillight 41 includes the bottom 48. The bottom 48 is located lower than the light source 45. The bottom 48 is invisible in the rear view of the vehicle. The bottom 48 extends forward from the lower end 44b of the second light transmitting portion 44 in the vehicle center section. The bottom 48 is located above the license plate 75 in the vehicle center section. The bottom 48 has the third light transmitting portion 49. The third light transmitting portion 49 has light transmissive properties. The light source 45 therefore illuminates the license plate 75. Specifically, the third light K3 from the light source 45 illuminates the license plate 75.

Thus, the light source 45 illuminates both the light-emitting surfaces (specifically the first light transmitting portion 43 and second light transmitting portion 44) of the taillight 41 and the license plate 75.

The rear undercover 61 is located between the right side cover 31 and left side cover 32. The rear undercover 61 includes the first portion 62. The first portion 62 is located below the second light transmitting portion 44 in the rear view of the vehicle. The first portion 62 is located above the license plate 75 in the rear view of the vehicle. The first portion 62 extends downward and rearward from the lower end 44b of the second light transmitting portion 44 and the rear end 48a of the bottom 48 in the vehicle center section. The first portion 62 of the rear undercover 61 is therefore located more rearward than the lower end 44b of the second light transmitting portion 44 and the rear end 48a of the bottom 48 in the vehicle center section. Consequently, the first portion 62 of the rear undercover 61 does not hamper the third light K3 from illuminating the license plate 75. The third light K3 can thus conveniently illuminate the license plate 75. This can conveniently secure visibility of the license plate 75.

The rear end 61d of the rear undercover 61 is located more rearward than the rear end 42c of the first exposed portion 42 in the vehicle center section. With the rear undercover 61 blocking the first light K1 and second light K2, the rear undercover 61 can inhibit the first light K1 and second light K2 from striking upon the license plate 75. This can inhibit the first light K1 and second light K2 from lowering the visibility of the license plate 75.

The rear end 61d of the rear undercover 61 is located more rearward than the rear end 75c of the license plate 75 in the vehicle center section. The rear undercover 61 can further inhibit the first light K1 and second light K2 from striking upon the license plate 75. This can further inhibit the first light K1 and second light K2 from lowering the visibility of the license plate 75.

As noted above, the second light transmitting portion 44 extends downward and forward in the vehicle center section. The first portion 62 of the rear undercover 61, in the vehicle center section, extends downward and rearward from the lower end 44b of the second light transmitting portion 44 and the rear end 48a of the bottom 48. The second light K2 can therefore conveniently illuminate the first portion 62 of the rear undercover 61. As a result, in addition to the first light transmitting portion 43 and second light transmitting portion 44, the first portion 62 of the rear undercover 61 also appears bright in the rear view of the vehicle. The visibility of the taillight 41 can therefore be improved effectively.

The first light transmitting portion 43 extends downward and rearward in the vehicle center section. Therefore, part of the first light K1 travels rearward and upward from the first light transmitting portion 43. Consequently, even if the taillight 41 is located in a position lower than the third parties' eyes, the visibility of the taillight 41 can be improved further.

According to the straddled vehicle 1, as described above, the visibility of the license plate 75 can be secured even where the same light source 45 illuminates both the light-emitting surfaces of the taillight 41 and the license plate 75. Further, according to the straddled vehicle 1, the visibility of the taillight 41 can be secured.

The rear end 62b of the first portion 62 is located more rearward than the rear end 44a of the second light transmitting portion 44 in the vehicle center section. The first portion 62 can thus sufficiently receive the second light K2. Consequently, the visibility of the taillight 41 can be improved effectively. Further, the first portion 62 can inhibit the first light K1 and second light K2 from striking upon the license plate 75.

The first portion 62 is in contact with the rear end 48a of the bottom 48 in the vehicle center section. The rear undercover 61 can thus appropriately receive the second light K2. The visibility of the taillight 41 can therefore be improved. Further, the first light K1 and second light K2 can conveniently be prevented from passing through between the first portion 62 and bottom 48 (that is, leaking of the first light K1 and second light K2). Consequently, the first portion 62 can appropriately prevent the first light K1 and second light K2 from striking upon the license plate 75. This can appropriately inhibit the first light K1 and second light K2 from lowering the visibility of the license plate 75.

The rear undercover 61 is, in a vehicle bottom view, located in a position overlapping the whole second light transmitting portion 44. The rear undercover 61 can therefore inhibit the second light K2 from striking upon the license plate 75. This can inhibit the second light K2 from lowering the visibility of the license plate 75.

The rear undercover 61 is, in the vehicle bottom view, located in a position not overlapping at least part of the third light transmitting portion 49. Consequently, the rear undercover 61 does not hamper the third light K3 from illuminating the license plate 75. The third light K3 can thus conveniently illuminate the license plate 75. This can conveniently secure visibility of the license plate 75.

The front end 61e of the rear undercover 61 is located more rearward than the third light transmitting portion 49 in the vehicle center section. Consequently, the rear undercover 61 does not hamper the third light K3 from illuminating the license plate 75. The third light K3 can thus conveniently illuminate the license plate 75. This can conveniently secure visibility of the license plate 75.

The rear edge 61a of the rear undercover 61 is, in a plan view of the vehicle, located behind the rear edge 42a of the first exposed portion 42. The rear undercover 61 can thus inhibit the first light K1 and second light K2 from striking upon the license plate 75. This can inhibit the first light K1 and second light K2 from lowering the visibility of the license plate 75.

The license plate 75 extends rearward and downward in the vehicle center section. At least part of the third light transmitting portion 49 is, in the vehicle center section, located more rearward than the front end 75d of the license plate 75 and more forward than the rear end 75c of the license plate 75. Consequently, the third light K3 further conveniently strikes upon the license plate 75. That is, the light source 45 can illuminate the license plate 75 further conveniently. This can further conveniently secure visibility of the license plate 75.

The third light transmitting portion 49 is located below the first light source 45 in the vehicle center section. Consequently, the third light K3 is conveniently emitted from the third light transmitting portion 49. The third light K3 can therefore illuminate the license plate 75 conveniently.

The third light transmitting portion 49 is, in the vehicle bottom view, located in a position overlapping at least part of the first light source 45. Consequently, the third light K3 is conveniently emitted from the third light transmitting portion 49. The third light K3 can therefore illuminate the license plate 75 conveniently.

The third light transmitting portion 49 is, in the vehicle center section, located on an imaginary straight line F linking the first light source 45 and license plate 75. Consequently, the third light K3 is conveniently emitted from the third light transmitting portion 49. The third light K3 can therefore illuminate the license plate 75 conveniently.

The length W2 in the transverse direction Y of the third light transmitting portion 49 is larger than the length L2 in the longitudinal direction X of the third light transmitting portion 49. The third light K3 can therefore illuminate the whole license plate 75 conveniently.

The straddled vehicle 1 has the first space 85 linearly extending in the vehicle center section from the third light transmitting portion 49 to the license plate 75. Consequently, the third light K3 traveling through the first space 85 can conveniently reach the license plate 75. The third light K3 can therefore illuminate the license plate 75 conveniently.

The rear end 75c of the license plate 75 is located more forward than the rear end 42c of the first exposed portion 42 in the vehicle center section. Consequently, the first light K1 and second light K2 can be further inhibited from striking upon the license plate 75. The first light K1 and second light K2 can therefore be further inhibited from lowering the visibility of the license plate 75.

The rear end 75a of the license plate 75 is located more forward than the rear end 42b of the first exposed portion 42. The first light K1 and second light K2 can therefore be further inhibited from striking upon the license plate 75.

In the vehicle center section, the length of the first light transmitting portion 43 is larger than the length of the second light transmitting portion 44. This can easily increase the quantity of light traveling rearward and upward from the light-emitting surfaces (specifically the first light transmitting portion 43 and second light transmitting portion 44) of the taillight 41. Consequently, the visibility of the taillight 41 can be improved easily.

In the rear view of the vehicle, the area of the first light transmitting portion 43 is larger than the area of the second light transmitting portion 44. This can easily increase the quantity of light traveling rearward and upward from the light-emitting surfaces (specifically the first light transmitting portion 43 and second light transmitting portion 44) of the taillight 41. Consequently, the visibility of the taillight 41 can be improved easily.

The length W1 in the transverse direction Y of the second light transmitting portion 44 is larger than the length H2 in the up-down direction Z of the second light transmitting portion 44. This construction can easily secure an area of the first portion 62 of the rear undercover 61 for receiving the second light K2. In other words, this construction can easily secure an area on the first portion 62 of the rear undercover 61 illuminated by the second light K2. Further, the second light K2 can illuminate the first portion 62 of the rear undercover 61 efficiently. The visibility of the taillight 41 can therefore be improved easily.

At least part of the first exposed portion 42 is located more rearward than the muffler 29. Thus, the first exposed portion 42 is located in a relatively rearward position. Consequently, an installation space for the first exposed portion 42 can be secured easily.

The flashers 51 have the second exposed portion 52 and third exposed portion 56. The second exposed portion 52 and third exposed portion 56 are visible in the rear view of the vehicle. The second exposed portion 52 extends rightward and upward from the first exposed portion 42 in the rear view of the vehicle. The third exposed portion 56 extends leftward and upward from the first exposed portion 42 in the rear view of the vehicle. The whole of first exposed portion 42, second exposed portion 52, and third exposed portion 56 is approximately U-shaped or approximately V-shaped in the rear view of the vehicle. This can conveniently secure the visibility of the taillight 41 and the visibility of the flashers 51.

The length in the longitudinal direction X of the whole of first exposed portion 42 and second exposed portion 52 is larger than the radius R of the rear wheel 27. The length L1 in the longitudinal direction X of the whole of first exposed portion 42 and third exposed portion 56 is larger than the radius R of the rear wheel 27. This can conveniently secure the visibility of the taillight 41 and the visibility of the flashers 51.

The first exposed portion 42 is located more rearward than the rear end 27a of the rear wheel 27. Consequently, an installation space for the taillight 41 can be secured easily. Further, an installation space for the flashers 51 can be secured easily.

The straddled vehicle 1 includes the body frame 3 and joining members 81 and 82. The joining members 81 and 82 join the whole of taillight 41 and flashers 51 to the body frame 3. Thus the taillight 41 and flashers 51 can be supported firmly. The taillight 41 and flashers 51 can therefore be enlarged easily.

The first exposed portion 42 is, in the side view of the vehicle, located more rearward than the first intersection of the rear edge 71a of the mud guard 71 and the lower edge of the right side cover 31. The first exposed portion 42 is, in the side view of the vehicle, located more rearward than the second intersection P of the rear edge 71a of the mud guard 71 and the lower edge 32a of the left side cover 32. This can easily provide an installation space for the license plate 75 below the first exposed portion 42. Further, the first space 85 can be formed in an appropriate position. Consequently, the third light K3 can illuminate the license plate 75 appropriately. This can easily secure the visibility of the license plate 75.

The rear end 31a of the right side cover 31 is located higher and more rearward than the rear end 75a of the license plate 75. Consequently, the right side cover 31 can further inhibit the first light K1 and second light K2 from striking upon the license plate 75. The first light K1 and second light K2 can therefore be further inhibited from lowering the visibility of the license plate 75.

The rear end 32d of the left side cover 32 is located higher and more rearward than the rear end 75a of the license plate 75. Consequently, the left side cover 32 can further inhibit the first light K1 and second light K2 from striking upon the license plate 75. The first light K1 and second light K2 can therefore be further inhibited from lowering the visibility of the license plate 75.

The first exposed portion 42 is located higher than the lower edge 32a of the left side cover 32 in the side view of the vehicle. The license plate 75 is located lower than the lower edge 32a of the left side cover 32 in the side view of the vehicle. An installation space for the taillight 41 can therefore be secured easily.

The mud guard 71 supports the license plate 75 but does not support the taillight 41. The taillight 41 is located in a position spaced from the mud guard 71. Consequently, an installation space for the taillight 41 can be secured easily.

The rear undercover 61 has the second portion 63. The second portion 63 is visible in the rear view of the vehicle. The second portion 63 is located below the first portion 62 and above the license plate 75 in the rear view of the vehicle. The second portion 63 extends downward and forward from the rear end 62b of the first portion 62 in the vehicle center section. The second portion 63 is therefore not illuminated by the light source 45. Consequently, even if the taillight 41 is switched on when it is dark around the straddled vehicle 1, the second portion 63 is dark in the rear view of the vehicle. As a result, in the rear view of the vehicle, a dark area can be formed below the first portion 62. The visibility of the first portion 62 can therefore be improved effectively. Further, in the rear view of the vehicle, a dark area can be formed above the license plate 75. Consequently, the visibility of the license plate 75 can be improved effectively.

The present teaching is not limited to the foregoing embodiment, but can be modified as follows:
(1) In the foregoing embodiment, the first portion 62 of the rear undercover 61 extends from the lower end 44b of the second light transmitting portion 44 and the rear end 48a of the bottom 48 in the vehicle center section. The present teaching is not limited to this. The first portion 62 of the rear undercover 61 may extend from at least one of the lower end 44b of the second light transmitting portion 44 and the rear end 48a of the bottom 48 in the vehicle center section.
(2) In the foregoing embodiment, the mud guard 71 is connected to the right side cover 31 and left side cover 32. The present teaching is not limited to this. The mud guard 71 may be connected to at least one of the right side cover 31 and left side cover 32.
(3) In the foregoing embodiment, the first portion 62 of the rear undercover 61 is in contact with the rear end 48a of the bottom 48 in the vehicle center section. The present teaching is not limited to this. The first portion 62 of the rear undercover 61 may be in contact with at least one of the lower end 44b of the second light transmitting portion 44 and the rear end 48a of the bottom 48 in the vehicle center section.
(4) In the foregoing embodiment, the length in the longitudinal direction X of the whole of first exposed portion 42 and second exposed portion 52 and the length L1 in the longitudinal direction X of the whole of first exposed portion 42 and third exposed portion 56 are larger than the radius R of the rear wheel 27. The present teaching is not limited to this. At least one of the length in the longitudinal direction X of the whole of first exposed portion 42 and second exposed portion 52 and the length L1 in the longitudinal direction X of the whole of first exposed portion 42 and third exposed portion 56 may be larger than the radius R of the rear wheel 27.
(5) In the foregoing embodiment, the first exposed portion 42 is located more rearward than the first intersection and second intersection P in the side view of the vehicle. The present teaching is not limited to this. The first exposed portion 42 may be located more rearward than at least one of the first intersection and second intersection P in the side view of the vehicle.
(6) In the foregoing embodiment, the rear end 31a of the right side cover 31 and the rear end 32d of the left side cover 32 are located higher and more rearward than the rear end 75a of the license plate 75. The present teaching is not limited to this. At least one of the rear end 31a of the right side cover 31 and the rear end 32d of the left side cover 32 may be located higher and more rearward than the rear end 75a of the license plate 75.
(7) In the foregoing embodiment, the third light transmitting portion 49 is a part of the bottom 48. The present teaching is not limited to this. The third light transmitting portions 49 may be the whole bottom 48.
(8) In the foregoing embodiment, the third light transmitting portion 49 is a clear cover. The present teaching is not limited to this. The third light transmitting portion 49 may be an opening.
(9) In the foregoing embodiment, the bottom 48 has the shielding portion 50. The present teaching is not limited to this. The bottom 48 may have a light transmitting portion instead of the shielding portion 50.

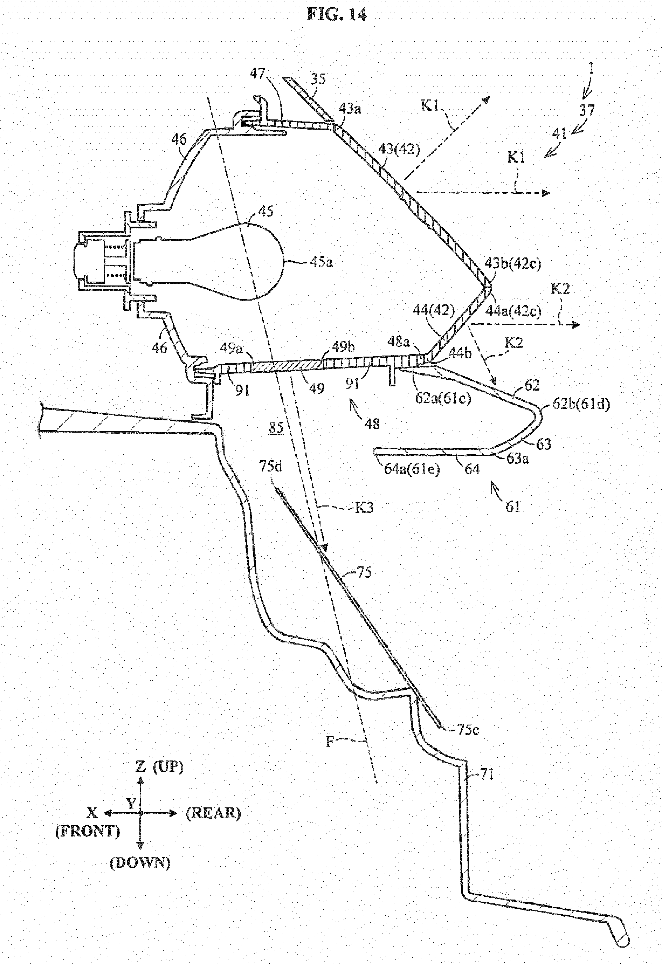

Fig. 14 is a sectional view taken through the vehicle center of the rear portion of the straddled vehicle 1 in a modified embodiment. Components identical to those of the embodiment are shown with the same signs, and will not particularly be described.

The bottom 48 includes, in addition to the third light transmitting portion 49, a sixth light transmitting portion 91 having light transmissive properties. The sixth light transmitting portion 91 is located around the third light transmitting portion 49. The sixth light transmitting portion 91 is a clear cover, for example. The sixth light transmitting portion 91 is not colorless but has a color, for example. The sixth light transmitting portion 91 has a color other than white, for example. The sixth light transmitting portion 91 is red-colored, for example. The first light transmitting portion 43, second light transmitting portion 44, and sixth light transmitting portion 91 are formed integral, for example. The first light transmitting portion 43, second light transmitting portion 44, and sixth light transmitting portion 91 are inseparable from one another, for example. The first light transmitting portion 43, second light transmitting portion 44, and sixth light transmitting portion 91 are formed of one inseparable clear cover, for example.

In this modified embodiment also, the license plate 75 can be appropriately illuminated by the third light K3 emitted from the third light transmitting portion 49. The visibility of the license plate 75 can therefore be secured conveniently.

(10) In the foregoing embodiment, the shielding portion 50 and first housing 46 may be formed integral. The shielding portion 50 and first housing 46 may be inseparable from each other.

(11) In the foregoing embodiment, the first light source 45 is located on the vehicle center plane C. The present teaching is not limited to this. The first light source 45 may be located in a position not intersecting the vehicle center plane C.

(12) In the foregoing embodiment, the boundary J is in the same position as the rear edge 42a of the first exposed portion 42 in the plan view of the vehicle. The present teaching is not limited to this. The boundary J may be in a position different from the rear edge 42a of the first exposed portion 42 in the plan view of the vehicle.

In the foregoing embodiment, the rear edge 44d of the second light transmitting portion 44 in the vehicle bottom view is in the same position as the rear edge 42a of the first exposed portion 42 in the plan view of the vehicle. The present teaching is not limited to this. The rear edge 44d of the second light transmitting portion 44 in the vehicle bottom view may be in a position different from the rear edge 42a of the first exposed portion 42 in the plan view of the vehicle.

(13) In the foregoing embodiment, the rear end 42b of the first exposed portion 42 is located on the vehicle center plane C, for example. The present teaching is not limited to this. The rear end 42b of the first exposed portion 42 may be located in a position not intersecting the vehicle center plane C. In the foregoing embodiment, the rear end 42c of the first exposed portion 42 in the vehicle center section is in the same position as the rear end 42b of first exposed portion 42. The present teaching is not limited to this. The rear end 42c of the first exposed portion 42 in the vehicle center section may be in a position different from the rear end 42b of the first exposed portion 42.

(14) In the foregoing embodiment, the rear end 61b of the rear undercover 61 is located on the vehicle center plane C. The present teaching is not limited to this. The rear end 61b of the rear undercover 61 may be located in a position not intersecting the vehicle center plane C. In the foregoing embodiment, the rear end 61d of the rear undercover 61 in the vehicle center section is in the same positions as the rear end 61b of the rear undercover 61. The present teaching is not limited to this. The rear end 61d of the rear undercover 61 in the vehicle center section may be in a position different from the rear end 61b of the rear undercover 61.

(15) In the foregoing embodiment, the rear end 62b of the first portion 62 corresponds to the rear end 61d of the rear undercover 61 in the vehicle center section. The present teaching is not limited to this. The rear end 62b of the first portion 62 does not need to correspond to the rear end 61d of the rear undercover 61 in the vehicle center section.

(16) In the foregoing embodiment, the front edge 61f of the rear undercover 61 is located behind the third light transmitting portion 49 in the vehicle bottom view. The present teaching is not limited to this. The front edge 61f of the rear undercover 61 may be located in front of the third light transmitting portion 49 in the vehicle bottom view. In this case, the rear undercover 61 preferably has an opening. Further, the opening of the rear undercover 61 preferably is, in the vehicle bottom view, located in a position overlapping at least part of the third light transmitting portion 49.

(17) In the foregoing embodiment, the rear undercover 61 may be formed integral with the right side cover 31. The rear undercover 61 and right side cover 31 may be inseparable from each other. The rear undercover 61 and left side cover 32 may be constructed similarly.

The rear undercover 61 may be formed integral with part of the right side cover 31. The rear undercover 61 may be inseparable from the part of the right side cover 31. The rear undercover 61 and left side cover 32 may be constructed similarly.

The rear undercover 61 and right side cover 31 may be constructed of a plurality of members separable from one another. In this case, the boundary between the rear undercover 61 and right side cover 31 may correspond to at least part of boundaries between the plurality of members. The boundary between the rear undercover 61 and right side cover 31 may be different from at least part of the boundaries between the plurality of members. The rear undercover 61 and left side cover 32 may be constructed similarly.

(18) In the foregoing embodiment, the right side cover 31 has the same construction and shape as the left side cover 32 except for being bilaterally symmetric. The present teaching is not limited to this. The right side cover 31 may have a different construction from the left side cover 32. The right side cover 31 may have a different shape from the left side cover 32.

(19) In the foregoing embodiment, the lower edge 32a of the left side cover 32 is curved in the side view of the vehicle. The present teaching is not limited to this. The lower edge 32a of the left side cover 32 may extend linearly in the side view of the vehicle substantially. The lower edge of the right side cover 31 may be changed similarly.

(20) In the foregoing embodiment, the mud guard 71 may be formed integral with at least part of the right side cover 31. The mud guard 71 may be inseparable from at least part of the right side cover 31. The mud guard 71 and left side cover 32 may be constructed similarly.

The mud guard 71 and right side cover 31 may be constructed of a plurality of members separable from one another. In this case, the boundary between the mud guard 71 and right side cover 31 may correspond to at least part of boundaries between the plurality of members. The boundary between the mud guard 71 and right side cover 31 may be different from at least part of the boundaries between the plurality of members. The mud guard 71 and left side cover 32 may be constructed similarly.

(21) In the foregoing embodiment, the straddled vehicle 1 has been illustrated as an example of scooter type vehicles. The present teaching is not limited to this. The straddled vehicle 1 may be changed to vehicles of other types, such as the moped type, street type, sport type or a vehicle for irregular grounds (ALL-TERRAIN VEHICLE).

(22) In the foregoing embodiment, the number of front wheels 15 is one. The present teaching is not limited to this. The number of front wheels 15 may be changed to two. In the foregoing embodiment, the number of rear wheels 27 is one. The present teaching is not limited to this. The number of rear wheels 27 may be changed to two.

(23) In the foregoing embodiment, an engine (internal combustion engine) has been illustrated as power source. The present teaching is not limited to this. For example, the straddled vehicle 1 may have at least one of an engine and an electric motor as power source.

## Claims

1. A straddled vehicle (1) comprising:
a taillight (41);
a right side cover (31);
a left side cover (32);
the right side cover (31) is located rightward of the left side cover (32) in a transverse direction (Y) of the straddled vehicle (1) in a rear view of the straddled vehicle (1);
a rear undercover (61) located between the right side cover (31) and the left side cover (32);
a mud guard (71); and
a license plate (75);
wherein
the taillight (41) includes:
a light source (45);
a first exposed portion (42) visible in the rear view of the straddled vehicle (1); and
a bottom (48) located lower than the light source (45) in the up-down direction (Z) of the straddled vehicle (1) and invisible in the rear view of the straddled vehicle (1);
the first exposed portion (42) includes:
a first light transmitting portion (43) located more rearward in the longitudinal direction (X) of the straddled vehicle (1) than the light source (45) and having light transmissive properties; and
a second light transmitting portion (44) located more rearward in the longitudinal direction (X) of the straddled vehicle (1) than the light source (45) and having light transmissive properties;
the first light transmitting portion (43) extends downward in the up-down direction (Z) of the straddled vehicle (1) and rearward in the longitudinal direction (X) of the straddled vehicle (1) in a vehicle center section including a center of the straddled vehicle (1) and extending perpendicular to the transverse direction (Y) of the straddled vehicle (1);
the second light transmitting portion (44) extends downward in the up-down direction (Z) of the straddled vehicle (1);
the bottom (48) extends forward in the longitudinal direction (X) of the straddled vehicle (1) from a lower end (44b) of the second light transmitting portion (44) and is located higher in the up-down direction (Z) of the straddled vehicle (1) than the license plate (75) in the vehicle center section;
the rear undercover (61) includes a first portion (62) located below the second light transmitting portion (44) and above the license plate (75) in the up-down direction (Z) of the straddled vehicle (1) in the rear view of the straddled vehicle (1);
the first portion (62) extends downward in the up-down direction (Z) of the straddled vehicle (1) and rearward in the longitudinal direction (X) of the straddled vehicle (1) from at least one of the lower end (44b) of the second light transmitting portion (44) and a rear end (48a) of the bottom (48) in the vehicle center section;
the rear undercover (61) includes a rear end (61d) located more rearward in the longitudinal direction (X) of the straddled vehicle (1) than a rear end (42c) of the first exposed portion (42) in the vehicle center section; and
the rear end (61d) of the rear undercover (61) is located more rearward in the longitudinal direction (X) of the straddled vehicle (1) than a rear end (75c) of the license plate (75) in the vehicle center section, and wherein
the mud guard (71) is connected to at least one of the right side cover (31) and the left side cover (32), located below at least one of a lower edge of the right side cover (31) and a lower edge (32a) of the left side cover (32) in an up-down direction (Z) of the straddled vehicle (1) in a side view of the straddled vehicle (1), and extending downward in the up-down direction (Z) of the straddled vehicle (1) and rearward in a longitudinal direction (X) of the straddled vehicle (1);
the license plate (75) is supported by the mud guard (71); and **characterized in that** the second light transmitting portion (44) extends forward in the longitudinal direction (X) of the straddled vehicle (1) from a rear end (43b) of the first light transmitting portion (43) in the vehicle center section; and
the bottom (48) includes a third light transmitting portion (49) having light transmissive properties.

2. The straddled vehicle (1) according to claim 1, **characterized in that** the first portion (62) includes a rear end (62b) located more rearward in the longitudinal direction (X) of the straddled vehicle (1) than a rear end (44a) of the second light transmitting portion (44) in the vehicle center section.

3. The straddled vehicle (1) according to claim 1 or 2, **characterized in that** the first portion (62) is in contact with at least one of the lower end (44b) of the second light transmitting portion (44) and the rear end (48a) of the bottom (48) in the vehicle center section.

4. The straddled vehicle (1) according to any one of claims 1 to 3, **characterized in that:**
the rear undercover (61) is located in a position overlapping a whole of the second light transmitting portion (44) in a bottom view of the straddled vehicle (1); and
the rear undercover (61) is located in a position not overlapping at least part of the third light transmitting portion (49) in the bottom view of the straddled vehicle (1).

5. The straddled vehicle (1) according to any one of claims 1 to 4, **characterized in that:**
the license plate (75) extends rearward in the longitudinal direction (X) of the straddled vehicle (1) and downward in the up-down direction (Z) of the straddled vehicle (1) in the vehicle center section; and
at least part of the third light transmitting portion (49) is located more rearward in the longitudinal direction (X) of the straddled vehicle (1) than a front end (75d) of the license plate (75) and more forward in the longitudinal direction (X) of the straddled vehicle (1) than the rear end (75c) of the license plate (75) in the vehicle center section.

6. The straddled vehicle (1) according to any one of claims 1 to 5, **characterized in that** a length of the first light transmitting portion (43) is larger than a length of the second light transmitting portion (44) in the vehicle center section.

7. The straddled vehicle (1) according to any one of claims 1 to 6, **characterized in that** an area of the first light transmitting portion (43) is larger than an area of the second light transmitting portion (44) in the rear view of the straddled vehicle (1).

8. The straddled vehicle (1) according to any one of claims 1 to 7, **characterized in that** a length in the transverse direction (Y) of the straddled vehicle (1) of the second light transmitting portion (44) is larger than a length in the up-down direction (Z) of the straddled vehicle (1) of the second light transmitting portion (44).

9. The straddled vehicle (1) according to any one of claims 1 to 8, **characterized by** a muffler (29);
wherein at least part of the first exposed portion (42) is located more rearward in the longitudinal direction (X) of the straddled vehicle (1) than the muffler (29).

10. The straddled vehicle (1) according to any one of claims 1 to 9, **characterized by** flashers (51);
wherein
the flashers (51) include:
a second exposed portion (52) visible in the rear view of the straddled vehicle (1); and
a third exposed portion (56) visible in the rear view of the straddled vehicle (1);
the second exposed portion (52) extends rightward in the transverse direction (Y) of the straddled vehicle (1) and upward in the up-down direction (Z) of the straddled vehicle (1) from the first exposed portion (42) in the rear view of the straddled vehicle (1);
the third exposed portion (56) extends leftward in the transverse direction (Y) of the straddled vehicle (1) and upward in the up-down direction (Z) of the straddled vehicle (1) from the first exposed portion (42) in the rear view of the straddled vehicle (1); and
a whole of the first exposed portion (42), the second exposed portion (52), and the third exposed portion (56) is substantially U-shaped or substantially V-shaped in the rear view of the straddled vehicle (1).

11. The straddled vehicle (1) according to claim 10, **characterized by** a rear wheel (27);
wherein at least one of a length in the longitudinal direction (X) of the straddled vehicle (1) of a whole of the first exposed portion (42) and the second exposed portion (52) and a length (L1) in the longitudinal direction (X) of the straddled vehicle (1) of a whole of the first exposed portion (42) and the third exposed portion (56) is larger than a radius (R) of the rear wheel (27).

12. The straddled vehicle (1) according to claim 11, **characterized in that** the first exposed portion (42) is located more rearward in the longitudinal direction (X) of the straddled vehicle (1) than a rear end (27a) of the rear wheel (27).

13. The straddled vehicle (1) according to any one of claims 10 to 12, **characterized by**:
a body frame (3); and
joining members (81, 82) for joining a whole of the taillight (41) and the flashers (51) to the body frame (3).

14. The straddled vehicle (1) according to any one of claims 1 to 13, **characterized in that:**
the mud guard (71) includes a rear edge (71a) extending downward in the up-down direction (Z) of the straddled vehicle (1) and rearward in the longitudinal direction (X) of the straddled vehicle (1) in the side view of the straddled vehicle (1); and
the first exposed portion (42) is, in the side view of the straddled vehicle (1), located more rearward in the longitudinal direction (X) of the straddled vehicle (1) than at least one of a first intersection of the rear edge (71a) of the mud guard (71) and the lower edge of the right side cover (31) and a second intersection (P) of the rear edge (71a) of the mud guard (71) and the lower edge (32a) of the left side cover (32).

15. The straddled vehicle (1) according to any one of claims 1 to 14, **characterized in that:**
the right side cover (31) has a rear end (31a);
the left side cover (32) has a rear end (32d); and
at least one of the rear end (31a) of the right side cover (31) and the rear end (32d) of the left side cover (32) is located higher in the up-down direction (Z) of the straddled vehicle (1) and more rearward in the longitudinal direction (X) of the straddled vehicle (1) than a rear end (75a) of the license plate (75).

## Patentansprüche

1. Ein Spreiz-Sitz-Fahrzeug (1), das umfasst:
ein Rücklicht (41);
eine rechte Seitenabdeckung (31);
eine linke Seitenabdeckung (32);
die rechte Seitenabdeckung (31) ist rechts von der linken Seitenabdeckung (32) in einer Querrichtung (Y) des Spreiz-Sitz-Fahrzeugs (1) in einer Rückansicht des Spreiz-Sitz-Fahrzeugs (1) angeordnet;
eine hintere Unterabdeckung (61), die sich zwischen der rechten Seitenabdeckung (31) und der linken Seitenabdeckung (32) befindet;
einen Schmutzfänger (71); und
ein Kennzeichen (75);
wobei
das Rücklicht (41) umfasst:
eine Lichtquelle (45);
einen ersten freiliegenden Abschnitt (42), der in der Rückansicht des Spreiz-Sitz-Fahrzeugs (1) sichtbar ist; und
einen Boden (48), der tiefer als die Lichtquelle (45) liegt in der Auf-Ab-Richtung (Z) des Spreiz-Sitz-Fahrzeugs (1), und in der Rückansicht des Spreiz-Sitz-Fahrzeugs (1) nicht sichtbar ist;
der erste freiliegende Abschnitt (42) enthält:
einen ersten lichtdurchlässigen Abschnitt (43), der in der Längsrichtung (X) des Spreiz-Sitz-Fahrzeugs (1) weiter hinten angeordnet ist als die Lichtquelle (45) und lichtdurchlässige Eigenschaften hat; und
einen zweiten lichtdurchlässigen Abschnitt (44), der in der Längsrichtung (X) des Spreiz-Sitz-Fahrzeugs (1) weiter hinten angeordnet ist als die Lichtquelle (45) und lichtdurchlässige Eigenschaften hat;
der erste lichtdurchlässige Abschnitt (43) erstreckt sich in der Auf-Ab-Richtung (Z) des Spreiz-Sitz-Fahrzeugs (1) nach unten und in der Längsrichtung (X) des Spreiz-Sitz-Fahrzeugs (1) nach hinten in einem Fahrzeugmittelabschnitt, der eine Mitte des Spreiz-Sitz-Fahrzeugs (1) einschließt, und erstreckt sich senkrecht zu der Querrichtung (Y) des Spreiz-Sitz-Fahrzeugs (1);
der zweite lichtdurchlässige Abschnitt (44) erstreckt sich in der Auf-Ab-Richtung (Z) des Spreiz-Sitz-Fahrzeugs (1) nach unten;
der Boden (48) erstreckt sich nach vorne, in der Längsrichtung (X) des Spreiz-Sitz-Fahrzeugs (1) von einem unteren Ende (44b) des zweiten lichtdurchlässigen Abschnitts (44), und ist höher in derAuf-Ab-Richtung (Z) des Spreiz-Sitz-Fahrzeugs (1) angeordnet ist als das Kennzeichen (75) in dem Fahrzeugmittelabschnitt;
die hintere Unterabdeckung (61) enthält einen ersten Abschnitt (62), der unterhalb des zweiten lichtdurchlässigen Abschnitts (44) und oberhalb des Kennzeichens (75) in der Auf-Ab-Richtung (Z) des Spreiz-Sitz-Fahrzeugs (1) in der Rückansicht des Spreiz-Sitz-Fahrzeugs (1) angeordnet ist;
der erste Abschnitt (62) erstreckt sich nach unten, in der Auf-Ab-Richtung (Z) des Spreiz-Sitz-Fahrzeugs (1), und nach hinten, in der Längsrichtung (X) des Spreiz-Sitz-Fahrzeugs (1) vom von zumindest einem von dem unteren Ende (44b) des zweiten lichtdurchlässigen Abschnitts (44) und einem hinteren Ende (48a) des Bodens (48) in dem Fahrzeugmittelabschnitt;
die hintere Unterabdeckung (61) enthält ein hinteres Ende (61d), das weiter hinten angeordnet ist, in der Längsrichtung (X) des Spreiz-Sitz-Fahrzeugs (1) als ein hinteres Ende (42c) des ersten freiliegenden Abschnitts (42) in dem Fahrzeugmittelabschnitt; und
das hintere Ende (61d) der hinteren Unterabdeckung (61) ist weiter hinten angeordnet, in Längsrichtung (X) des Spreiz-Sitz-Fahrzeugs (1), als ein hinteres Ende (75c) des Kennzeichens (75) in dem Fahrzeugmittelabschnitt, wobei
der Schmutzfänger (71) mit zumindest einer von der rechten Seitenabdeckung (31) und der linken Seitenabdeckung (32) verbunden ist, unterhalb zumindest einer von einer Unterkante der rechten Seitenabdeckung (31) und einer Unterkante (32a) der linken Seitenabdeckung (32) in einer Auf-Ab-Richtung (Z) des Spreiz-Sitz-Fahrzeugs (1) in einer Seitenansicht des Spreiz-Sitz-Fahrzeugs (1) angeordnet ist, und sich nach unten, in der Auf-Ab-Richtung (Z) des Spreiz-Sitz-Fahrzeugs (1), und sich nach hinten, in einer Längsrichtung (X) des Spreiz-Sitz-Fahrzeugs (1), erstreckt;
das Kennzeichen (75) wird durch den Schmutzfänger (71) gehalten;
**dadurch gekennzeichnet, dass** der zweite Lichtübertragungsabschnitt (44) sich nach vorne erstreckt, in der Längsrichtung (X) des Spreiz-Sitz-Fahrzeugs (1), von einem hinteren Ende (43b) des ersten Lichtübertragungsabschnitts (43) in dem Fahrzeugmittelabschnitt; und
der Boden (48) einen dritten lichtdurchlässigen Teil (49) mit lichtdurchlässigen Eigenschaften enthält.

2. Das Spreiz-Sitz-Fahrzeug (1) gemäß Anspruch 1, **dadurch gekennzeichnet, dass** der erste Abschnitt (62) ein hinteres Ende (62b) enthält, das weiter hinten in der Längsrichtung (X) des Spreiz-Sitz-Fahrzeugs (1) als ein hinteres Ende (44a) des zweiten lichtdurchlässigen Abschnitts (44) in dem Fahrzeugmittelabschnitt angeordnet ist.

3. Das Spreiz-Sitz-Fahrzeug (1) gemäß Anspruch 1 oder 2, **dadurch gekennzeichnet, dass** der erste Abschnitt (62) mit zumindest einem von dem unteren Ende (44b) des zweiten lichtdurchlässigen Abschnitts (44) und dem hinteren Ende (48a) des Bodens (48) in dem Fahrzeugmittelabschnitt in Kontakt ist.

4. Das Spreiz-Sitz-Fahrzeug (1) gemäß irgendeinem der Ansprüche 1 bis 3, **dadurch gekennzeichnet, dass:**
die hintere Unterabdeckung (61) in einer Position angeordnet ist, die den gesamten zweiten lichtdurchlässigen Abschnitt (44) in einer Ansicht von unten auf das Spreiz-Sitz-Fahrzeug (1) überlappt; und
die hintere Unterabdeckung (61) in einer Position angeordnet ist, die zumindest einen Teil des dritten lichtdurchlässigen Abschnitts (49) in der Ansicht von unten auf das Spreiz-Sitz-Fahrzeugs (1) nicht überlappt.

5. Das Spreiz-Sitz-Fahrzeug (1) gemäß irgendeinem der Ansprüche 1 bis 4, **dadurch gekennzeichnet, dass:**
das Kennzeichen (75) sich nach hinten in Längsrichtung (X) des Spreiz-Sitz-Fahrzeugs (1) und nach unten in der Auf-Ab-Richtung (Z) des Spreiz-Sitz-Fahrzeugs (1) in dem Fahrzeugmittelabschnitt erstreckt; und
zumindest ein Teil des dritten lichtdurchlässigen Abschnitts (49) weiter hinten in der Längsrichtung (X) des Spreiz-Sitz-Fahrzeugs (1) angeordnet ist als ein vorderes Ende (75d) des Kennzeichens (75) und weiter vorne in der Längsrichtung (X) des Spreiz-Sitz-Fahrzeugs (1) angeordnet ist als das hintere Ende (75c) des Kennzeichens (75) in dem Fahrzeugmittelabschnitt.

6. Das Spreiz-Sitz-Fahrzeug (1) gemäß irgendeinem der Ansprüche 1 bis 5, **dadurch gekennzeichnet, dass** eine Länge des ersten lichtdurchlässigen Abschnitts (43) größer ist als eine Länge des zweiten lichtdurchlässigen Abschnitts (44) in dem Fahrzeugmittelabschnitt.

7. Das Spreiz-Sitz-Fahrzeug (1) gemäß irgendeinem der Ansprüche 1 bis 6, **dadurch gekennzeichnet, dass** eine Bereich des ersten lichtdurchlässigen Abschnitts (43) größer ist als eine Bereich des zweiten lichtdurchlässigen Abschnitts (44) in der Rückansicht des Spreiz-Sitz-Fahrzeugs (1).

8. Das Spreiz-Sitz-Fahrzeug (1) gemäß irgendeinem der Ansprüche 1 bis 7, **dadurch gekennzeichnet, dass** eine Länge des zweiten lichtdurchlässigen Abschnitts (44) in der Querrichtung (Y) des Spreiz-Sitz-Fahrzeugs (1) größer ist als eine Länge des zweiten lichtdurchlässigen Abschnitts (44) in der Auf-Ab-Richtung (Z) des Spreiz-Sitz-Fahrzeugs (1).

9. Das Spreiz-Sitz-Fahrzeug (1) gemäß irgendeinem der Ansprüche 1 bis 8, **gekennzeichnet durch** einen Schalldämpfer (29);
wobei zumindest ein Teil des ersten freiliegenden Abschnitts (42) weiter hinten in der Längsrichtung (X) des Spreiz-Sitz-Fahrzeugs (1) angeordnet ist als der Schalldämpfer (29).

10. Das Spreiz-Sitz-Fahrzeug (1) gemäß irgendeinem der Ansprüche 1 bis 9, **gekennzeichnet durch** Blinker (51);
wobei
die Blinker (51) enthalten:
einen zweiten freiliegenden Abschnitt (52), der in der Rückansicht des Spreiz-Sitz-Fahrzeugs (1) sichtbar ist; und
einen dritten freiliegenden Abschnitt (56), der in der Rückansicht des Spreiz-Sitz-Fahrzeugs (1) sichtbar ist;
der zweite freiliegende Abschnitt (52) erstreckt sich nach rechts in der Querrichtung (Y) des Spreiz-Sitz-Fahrzeugs (1) und nach oben in der Auf-Ab-Richtung (Z) des Spreiz-Sitz-Fahrzeugs (1) von dem ersten freiliegenden Abschnitt (42) in der Rückansicht des Spreiz-Sitz-Fahrzeugs (1);
der dritte freiliegende Abschnitt (56) erstreckt sich nach links in der Querrichtung (Y) des Spreiz-Sitz-Fahrzeugs (1) und nach oben in der Auf-Ab-Richtung (Z) des Spreiz-Sitz-Fahrzeugs (1) von dem ersten freiliegenden Abschnitt (42) in der Rückansicht des Spreiz-Sitz-Fahrzeugs (1); und
der gesamte erste freiliegende Abschnitt (42), der zweite freiliegende Abschnitt (52) und der dritte freiliegende Abschnitt (56) sind im Wesentlichen U-förmig oder im Wesentlichen V-förmig in der Rückansicht des Spreiz-Sitz-Fahrzeugs (1).

11. Das Spreiz-Sitz-Fahrzeug (1) gemäß Anspruch 10, **gekennzeichnet durch** ein Hinterrad (27);
wobei zumindest eine von einer Länge in der Längsrichtung (X) des Spreiz-Sitz-Fahrzeugs (1) des gesamten ersten freiliegenden Abschnitts (42) und des zweiten freiliegenden Abschnitts (52) und eine Länge (L1) in der Längsrichtung (X) des Spreiz-Sitz-Fahrzeugs (1) des gesamten ersten freiliegenden Abschnitts (42) und des dritten freiliegenden Abschnitts (56) größer ist als ein Radius (R) des Hinterrads (27).

12. Das Spreiz-Sitz-Fahrzeug (1) gemäß Anspruch 11, **dadurch gekennzeichnet, dass** der erste freiliegende Abschnitt (42) weiter hinten angeordnet ist in der Längsrichtung (X) des Spreiz-Sitz-Fahrzeugs (1) als ein hinteres Ende (27a) des Hinterrads (27).

13. Das Spreiz-Sitz-Fahrzeug (1) gemäß irgendeinem der Ansprüche 10 bis 12, **gekennzeichnet durch:**
einen Körperrahmen (3); und
Verbindungselemente (81, 82) zur Verbindung des gesamten Rücklichts (41) und der Blinker (51) mit dem Körperrahmen (3).

14. Das Spreiz-Sitz-Fahrzeug (1) gemäß irgendeinem der Ansprüche 1 bis 13, **dadurch gekennzeichnet, dass:**
der Schmutzfänger (71) eine Hinterkante (71a) enthält, die sich nach unten in der Auf-Ab-Richtung (Z) des Spreiz-Sitz-Fahrzeugs (1) und nach hinten in der Längsrichtung (X) des Spreiz-Sitz-Fahrzeugs (1) in der Seitenansicht des Spreiz-Sitz-Fahrzeugs (1) erstreckt; und
der erste freiliegende Abschnitt (42), in der Seitenansicht des Spreiz-Sitz-Fahrzeugs (1), weiter hinten angeordnet ist in der Längsrichtung (X) des Spreiz-Sitz-Fahrzeugs (1) als zumindest einer von einem ersten Schnittpunkt der Hinterkante (71a) des Schmutzfängers (71) und der Unterkante der rechten Seitenabdeckung (31) und einem zweiten Schnittpunkt (P) der Hinterkante (71a) des Schmutzfängers (71) und der Unterkante (32a) der linken Seitenabdeckung (32).

15. Das Spreiz-Sitz-Fahrzeug (1) gemäß irgendeinem der Ansprüche 1 bis 14, **dadurch gekennzeichnet, dass:**
die rechte Seitenabdeckung (31) ein hinteres Ende (31a) hat;
die linke Seitenabdeckung (32) ein hinteres Ende (32d) hat; und
zumindest eines von dem hinteren Ende (31a) der rechten Seitenabdeckung (31) und dem hinteren Ende (32d) der linken Seitenabdeckung (32) höher in der Auf-Ab-Richtung (Z) des Spreiz-Sitz-Fahrzeugs (1) und weiter hinten in der Längsrichtung (X) des Spreiz-Sitz-Fahrzeugs (1) als ein hinteres Ende (75a) des Kennzeichens (75) angeordnet ist.

## Revendications

1. Véhicule à califourchon (1) comprenant :
un feu arrière (41) ;
un capot latéral droit (31) ;
un capot latéral gauche (32) ;
le capot latéral droit (31) est situé à droite du capot latéral gauche (32) dans une direction transversale (Y) du véhicule à califourchon (1) dans une vue arrière du véhicule à califourchon (1) ;
un cache arrière (61) situé entre le capot latéral droit (31) et le capot latéral gauche (32) ;
un garde-boue (71) ; et
une plaque d'immatriculation (75) ;
dans lequel :
le feu arrière (41) inclut :
une source lumineuse (45) ;
une première partie exposée (42) visible à l'arrière du véhicule à califourchon (1) ; et
un fond (48) situé plus bas que la source lumineuse (45) dans la direction haut-bas (Z) du véhicule à califourchon (1) et invisible dans la vue arrière du véhicule à califourchon (1) ;
la première partie exposée (42) inclut :
une première partie transmettant la lumière (43) située plus en arrière dans la direction longitudinale (X) du véhicule à califourchon (1) que la source lumineuse (45) et ayant des propriétés de transmission de la lumière ; et
une deuxième partie transmettant la lumière (44) située plus en arrière dans la direction longitudinale (X) du véhicule à califourchon (1) que la source lumineuse (45) et ayant des propriétés de transmission de la lumière ;
la première partie transmettant la lumière (43) s'étend vers le bas dans la direction haut-bas (Z) du véhicule à califourchon (1) et vers l'arrière dans la direction longitudinale (X) du véhicule à califourchon (1) dans une section centrale du véhicule incluant un centre du véhicule à califourchon (1) et s'étendant perpendiculairement à la direction transversale (Y) du véhicule à califourchon (1) ;
la deuxième partie transmettant la lumière (44) s'étend vers le bas dans la direction haut-bas (Z) du véhicule à califourchon (1) ;
le fond (48) s'étend vers l'avant dans la direction longitudinale (X) du véhicule à califourchon (1) à partir d'une extrémité inférieure (44b) de la deuxième partie transmettant la lumière (44) et est situé plus haut dans la direction haut-bas (Z) du véhicule à califourchon (1) que la plaque d'immatriculation (75) dans la section centrale du véhicule ;
le cache arrière (61) inclut une première partie (62) située sous la deuxième partie transmettant la lumière (44) et au-dessus de la plaque d'immatriculation (75) dans la direction haut-bas (Z) du véhicule à califourchon (1) dans la vue arrière du véhicule à califourchon (1) ;
la première partie (62) s'étend vers le bas dans la direction haut-bas (Z) du véhicule à califourchon (1) et vers l'arrière dans la direction longitudinale (X) du véhicule à califourchon (1) à partir d'au moins l'une de l'extrémité inférieure (44b) de la deuxième partie transmettant la lumière (44) et d'une extrémité arrière (48a) du fond (48) dans la section centrale du véhicule ;
le cache arrière (61) inclut une extrémité arrière (61d) située plus en arrière dans la direction longitudinale (X) du véhicule à califourchon (1) qu'une extrémité arrière (42c) de la première partie exposée (42) dans la section centrale du véhicule ; et
l'extrémité arrière (61d) du cache arrière (61) est située plus en arrière dans la direction longitudinale (X) du véhicule à califourchon (1) que l'extrémité arrière (75c) de la plaque d'immatriculation (75) dans la section centrale du véhicule, et dans lequel
le garde-boue (71) est relié à au moins un des capots latéraux droit (31) et gauche (32), situé sous au moins un des bords inférieurs du capot latéral droit (31) et un bord inférieur (32a) du capot latéral gauche (32) dans une direction haut-bas (Z) du véhicule à califourchon (1) dans une vue latérale du véhicule à califourchon (1), et s'étendant vers le bas dans la direction haut-bas (Z) du véhicule à califourchon (1) et vers l'arrière dans une direction longitudinale (X) du véhicule à califourchon (1) ;
la plaque d'immatriculation (75) est soutenue par le garde-boue (71) ; et **caractérisé en ce que**
la deuxième partie transmettant la lumière (44) s'étend vers l'avant dans la direction longitudinale (X) du véhicule à califourchon (1) à partir d'une extrémité arrière (43b) de la première partie transmettant la lumière (43) dans la section centrale du véhicule ; et
le fond (48) inclut une troisième partie transmettant la lumière (49) ayant des propriétés de transmission de la lumière.

2. Véhicule à califourchon (1) selon la revendication 1, **caractérisé en ce que** la première partie (62) inclut une extrémité arrière (62b) située plus en arrière dans la direction longitudinale (X) du véhicule à califourchon (1) qu'une extrémité arrière (44a) de la deuxième partie transmettant la lumière (44) dans la section centrale du véhicule.

3. Véhicule à califourchon (1) selon la revendication 1 ou 2, **caractérisé en ce que** la première partie (62) est en contact avec au moins l'une de l'extrémité inférieure (44b) de la deuxième partie transmettant la lumière (44) et de l'extrémité arrière (48a) du fond (48) dans la section centrale du véhicule.

4. Véhicule à califourchon (1) selon l'une quelconque des revendications 1 à 3, **caractérisé en ce que** :
le cache arrière (61) est situé dans une position recouvrant la totalité de la deuxième partie transmettant la lumière (44) dans une vue de dessous du véhicule à califourchon (1) ; et
le cache arrière (61) est situé dans une position ne recouvrant pas au moins une partie de la troisième partie transmettant la lumière (49) dans la vue de dessous du véhicule à califourchon (1).

5. Véhicule à califourchon (1) selon l'une quelconque des revendications 1 à 4, **caractérisé en ce que** :
la plaque d'immatriculation (75) s'étend vers l'arrière dans la direction longitudinale (X) du véhicule à califourchon (1) et vers le bas dans la direction haut-bas (Z) du véhicule à califourchon (1) dans la section centrale du véhicule ; et
au moins une partie de la troisième partie transmettant la lumière (49) est située plus en arrière dans la direction longitudinale (X) du véhicule à califourchon (1) qu'une extrémité avant (75d) de la plaque d'immatriculation (75) et plus en avant dans la direction longitudinale (X) du véhicule à califourchon (1) que l'extrémité arrière (75c) de la plaque d'immatriculation (75) dans la section centrale du véhicule.

6. Véhicule à califourchon (1) selon l'une quelconque des revendications 1 à 5, **caractérisé en ce qu'**une longueur de la première partie transmettant la lumière (43) est supérieure à une longueur de la deuxième partie transmettant la lumière (44) dans la section centrale du véhicule.

7. Véhicule à califourchon (1) selon l'une quelconque des revendications 1 à 6, **caractérisé en ce qu'**une zone de la première partie transmettant la lumière (43) est plus grande qu'une zone de la deuxième partie transmettant la lumière (44) dans la vue arrière du véhicule à califourchon (1).

8. Véhicule à califourchon (1) selon l'une quelconque des revendications 1 à 7, **caractérisé en ce qu'**une longueur dans la direction transversale (Y) du véhicule à califourchon (1) de la deuxième partie transmettant la lumière (44) est plus grande qu'une longueur dans la direction haut-bas (Z) du véhicule à califourchon (1) de la deuxième partie transmettant la lumière (44).

9. Véhicule à califourchon (1) selon l'une quelconque des revendications 1 à 8, **caractérisé par** un silencieux (29) ;
dans lequel au moins une partie de la première partie exposée (42) est située plus en arrière dans la direction longitudinale (X) du véhicule à califourchon (1) que le silencieux (29).

10. Véhicule à califourchon (1) selon l'une quelconque des revendications 1 à 9, **caractérisé par** des clignotants (51) ;
dans lequel
les clignotants (51) incluent :
une deuxième partie exposée (52) visible à l'arrière du véhicule à califourchon (1) ; et
une troisième partie exposée (56) visible à l'arrière du véhicule à califourchon (1) ;
la deuxième partie exposée (52) s'étend vers la droite dans la direction transversale (Y) du véhicule à califourchon (1) et vers le haut dans la direction haut-bas (Z) du véhicule à califourchon (1) à partir de la première partie exposée (42) dans la vue arrière du véhicule à califourchon (1) ;
la troisième partie exposée (56) s'étend vers la gauche dans la direction transversale (Y) du véhicule à califourchon (1) et vers le haut dans la direction haut-bas (Z) du véhicule à califourchon (1) à partir de la première partie exposée (42) dans la vue arrière du véhicule à califourchon (1) ; et
l'ensemble de la première partie exposée (42), de la deuxième partie exposée (52) et de la troisième partie exposée (56) est sensiblement en forme de U ou de V dans la vue arrière du véhicule à califourchon (1).

11. Véhicule à califourchon (1) selon la revendication 10, **caractérisé par** une roue arrière (27) ;
dans lequel au moins l'une d'une longueur dans la direction longitudinale (X) du véhicule à califourchon (1) de l'ensemble de la première partie exposée (42) et de la deuxième partie exposée (52) et d'une longueur (L1) dans la direction longitudinale (X) du véhicule à califourchon (1) de l'ensemble de la première partie exposée (42) et de la troisième partie exposée (56) est plus grande qu'un rayon (R) de la roue arrière (27).

12. Véhicule à califourchon (1) selon la revendication 11, **caractérisé en ce que** la première partie exposée (42) est située plus en arrière dans la direction longitudinale (X) du véhicule à califourchon (1) qu'une extrémité arrière (27a) de la roue arrière (27).

13. Véhicule à califourchon (1) selon l'une quelconque des revendications 10 à 12, **caractérisé par** :
un châssis de carrosserie (3) ; et
des éléments de jonction (81, 82) pour relier l'ensemble du feu arrière (41) et des clignotants (51) au châssis de carrosserie (3).

14. Véhicule à califourchon (1) selon l'une quelconque des revendications 1 à 13, **caractérisé en ce que** :
le garde-boue (71) inclut un bord arrière (71a) qui s'étend vers le bas dans la direction haut-bas (Z) du véhicule à califourchon (1) et vers l'arrière dans la direction longitudinale (X) du véhicule à califourchon (1) dans la vue latérale du véhicule à califourchon (1) ; et
la première partie exposée (42) est, dans la vue latérale du véhicule à califourchon (1), située plus en arrière dans la direction longitudinale (X) du véhicule à califourchon (1) qu'au moins l'une d'une première intersection du bord arrière (71a) du garde-boue (71) et du bord inférieur du capot latéral droit (31) et d'une deuxième intersection (P) du bord arrière (71a) du garde-boue (71) et du bord inférieur (32a) du capot latéral gauche (32).

15. Véhicule à califourchon (1) selon l'une quelconque des revendications 1 à 14, **caractérisé en ce que** :
le capot latéral droit (31) a une extrémité arrière (31a) ;
le capot latéral gauche (32) a une extrémité arrière (32d) ; et
au moins l'une de l'extrémité arrière (31a) du capot latéral droit (31) et l'extrémité arrière (32d) du capot latéral gauche (32) est située plus haut dans la direction haut-bas (Z) du véhicule à califourchon (1) et plus en arrière dans la direction longitudinale (X) du véhicule à califourchon (1) qu'une extrémité arrière (75a) de la plaque d'immatriculation (75).
